# EUROPEAN PATENT APPLICATION

(11) **EP 4 667 388 A1**
(43) Date of publication of application: **24.12.2025**
(21) Application number: 25720615.1
(22) Date of filing: 11.02.2025
(51) Int. Cl.: B65G 1/04

(54) **GOODS STORAGE AND RETRIEVAL SYSTEM**

(30) Priority: 28.04.2024 CN 202410525972
(71) Applicant: Beijing Jingdong Qianshi Technology Co., Ltd., Beijing 100176 (CN)
(72) Inventor: ZHANG, Lei, Beijing 100176 (CN); ZHANG, Guoliang, Beijing 100176 (CN); ZHANG, Genyun, Beijing 100176 (CN); YUAN, Mingjian, Beijing 100176 (CN); CHENG, Yan, Beijing 100176 (CN)
(74) Representative: Fioravanti, Corrado
(86) International application number: PCT/CN2025/076750
(87) International publication number: WO 2025/227875

(57) **Abstract**

Disclosed is a cargo storing and retrieval system. The cargo storing and retrieval system includes a shelf (1) and a plurality of cargo retrieval and placing apparatus (2). The shelf (1) has a storage unit. The storage unit includes a plurality of rows of storage spaces (12) disposed in a vertical direction. Each row of storage spaces (12) includes a plurality of storage positions (121) disposed side by side. The storage unit is provided with at least two cargo retrieval and placing apparatuses (2). A cargo retrieval and placing apparatus (2) is a main cargo retrieval and placing apparatus (2a) corresponding to a main retrieval and placing region. All two main retrieval and placing regions are disposed sequentially from top to bottom and jointly cover all the storage spaces (12) of the storage unit. Two adjacent main retrieval and placing regions overlap to cover at least one row of storage spaces (12) to form a first common retrieval and placing region (122). The main cargo retrieval and placing apparatus (2a) is able to move along a surface of the shelf (1) to retrieve and place a cargo (5) that is at a storage position (121) and is in a main retrieval and placing region corresponding to the main cargo retrieval and placing apparatus (2a).

## Description

The present application claims priority to Chinese Patent Application No. 202410525972.6 filed with the China National Intellectual Property Administration (CNIPA) on Apr. 28, 2024, the disclosure of which is incorporated herein by reference in its entirety.

### TECHNICAL FIELD

The present application relates to the technical field of logistics, for example, a cargo storing and retrieval system.

### BACKGROUND

With the rapid development of the E-commerce economy, intelligent cargo storing and retrieval systems that can implement automatic inbound and outbound operations are increasingly widely applied, improving the efficiency of logistics, reducing the cost of logistics, and improving the reliability of logistics.

Warehousing logistics involving inbound and outbound operations usually include carton-to-person systems and shuttle vehicle rack systems. A cargo-to-person system employs an autonomous mobile carrying robot to retrieve and place cartons on a shelf. Through the lifting of a fork mechanism on the carrying robot along the vertical frame of the carrying robot, the cargo-to-person system implements the retrieval and placing of cartons at any layers of the shelf. A shuttle vehicle rack system includes a vertical shelf with multiple layers, a shuttle vehicle, and a lifting layer-changing mechanism. Each layer of the vertical shelf is provided with a rail for the shuttle vehicle to travel. The shuttle vehicle moves on a rail to retrieve and place cargoes at a respective layer. Moreover, the shuttle vehicle implements the transferring on rails at different layers through the lifting layer-changing mechanism.

When the preceding technology is implemented, the following problems exist: Although the cargo-to-person system is high in carrying efficiency, the vertical frame on the carrying robot needs to be configured to be at the same height when the shelf is high, reducing the operation stability of the fork mechanism on the vertical frame and making the cargo-to-person system difficult to meet the requirements of the high shelf; and although the shuttle vehicle rack system can meet the cargo storing and retrieval requirements of the high shelf, the arrangement of the lifting layer-changing mechanism and the arrangement of a rail at each layer make the shuttle vehicle rack system occupy a relatively large space entirely, resulting in high cost and raising relative high requirements of the height of a site.

### SUMMARY

The present application provides a cargo storing and retrieval system to improve the efficiency of warehousing and logistics and improve the reliability and stability of retrieving and placing a cargo on a shelf.

The cargo storing and retrieval system includes a shelf and a plurality of cargo retrieval and placing apparatus.

The shelf has a storage unit. The storage unit includes a plurality of rows of storage spaces disposed in a vertical direction. Each row of storage spaces among the plurality of rows of storage spaces includes a plurality of storage positions disposed side by side in a first direction.

The storage unit is provided with at least two cargo retrieval and placing apparatuses among the plurality of cargo retrieval and placing apparatuses. A cargo retrieval and placing apparatus among the plurality of cargo retrieval and placing apparatuses is a main cargo retrieval and placing apparatus corresponding to a main retrieval and placing region. At least two main retrieval and placing regions corresponding to the at least two cargo retrieval and placing apparatuses (2) respectively are disposed sequentially from top to bottom and jointly cover all the plurality of rows of storage spaces of the storage unit. Two adjacent main retrieval and placing regions overlap to cover at least one row of storage spaces among the plurality of rows of storage spaces to form a first common retrieval and placing region. The main cargo retrieval and placing apparatus is able to move along a surface of the shelf to retrieve and place a cargo that is at a storage position among the plurality of storage positions and is in a main retrieval and placing region corresponding to the main cargo retrieval and placing apparatus.

As the technical solutions of a cargo storing and retrieval system, a plurality of transverse rails are disposed on the surface of the shelf and each extend in the first direction.

Each cargo retrieval and placing apparatus among the plurality of cargo retrieval and placing apparatuses includes a moving mechanism and a storing and retrieval mechanism. The moving mechanism is able to move on transverse rails among the plurality of transverse rails in the first direction. The storing and retrieval mechanism is mounted on the moving mechanism in a movable manner in the vertical direction.

As the technical solutions of a cargo storing and retrieval system, at least one storage unit has two adjacent main cargo retrieval and placing apparatuses respectively movable on two opposite sides of a same shelf and having the first common retrieval and placing region. Main retrieval and placing regions of the two adjacent main cargo retrieval and placing apparatuses cover all of the at least one storage unit of the same shelf in a second direction. The second direction is perpendicular to the first direction.

Alternatively, at least two shelves are disposed side by side and spaced apart in the second direction. A laneway is formed between two adjacent shelves among the at least two shelves. Multiple cargo retrieval and placing apparatuses in the laneway are each configured to retrieve and place cargoes at storage units on two sides of the laneway. At least one of the storage units has two adjacent main cargo retrieval and placing apparatuses respectively movable on the two adjacent shelves and having the first common retrieval and placing region. The second direction is perpendicular to the first direction.

As the technical solutions of a cargo storing and retrieval system, in two main cargo retrieval and placing apparatuses that correspond to a same storage unit and are disposed adjacently in the vertical direction, an upper end of a moving mechanism on a lower side is higher than a lower end of a moving mechanism on an upper side.

As the technical solutions of a cargo storing and retrieval system, in two main cargo retrieval and placing apparatuses that correspond to a same storage unit and are disposed adjacently in the vertical direction, upper and lower moving mechanisms are spaced apart in the vertical direction.

A storing and retrieval mechanism on an upper side is able to move to extend downward out from a lower end of a moving mechanism to retrieve and place a cargo at a storage position in the first common retrieval and placing region; moreover/alternatively, a storing and retrieval mechanism on a lower side is able to move to extend upward out from an upper end of a moving mechanism to retrieve and place a cargo at a storage position in the first common retrieval and placing region.

As the technical solutions of a cargo storing and retrieval system, at least one storage unit has two main cargo retrieval and placing apparatuses that are movable on a same surface of a same shelf and are adjacent to each other in the vertical direction. At least one of the two main cargo retrieval and placing apparatuses is switchable between a first operation state and a second operation state.

In response to one main cargo retrieval and placing apparatus being in the first operation state, the one main cargo retrieval and placing apparatus and a main cargo retrieval and placing apparatus adjacent to the one main cargo retrieval and placing apparatus on a same side of a same shelf are spaced apart in the vertical direction. In response to the one main cargo retrieval and placing apparatus being in the second operation state, the one main cargo retrieval and placing apparatus partially overlaps a main cargo retrieval and placing apparatus that is adjacent in the vertical direction to and on a same side of a same shelf with the one main cargo retrieval and placing apparatus.

As the technical solutions of a cargo storing and retrieval system, the moving mechanism includes two vertical rails parallel to each other in the first direction and spaced apart and moving wheel mechanisms configured to drive the two vertical rails to move along the transverse rails. The storing and retrieval mechanism is mounted between the two vertical rails in a movable manner along the two vertical rails.

At least one end of each vertical rail among the two vertical rails of one main cargo retrieval and placing apparatus facing a main cargo retrieval and placing apparatus that is adjacent to and on the same side with the one main cargo retrieval and placing apparatus is retractable to enable the one main cargo retrieval and placing apparatus where the two vertical rails are located to switch between the first operation state and the second operation state.

As the technical solutions of a cargo storing and retrieval system, in response to the one main cargo retrieval and placing apparatus being in the second operation state, vertical rails of the two adjacent main cargo retrieval and placing apparatuses partially overlap each other in the vertical direction.

Moreover/alternatively, two ends of each vertical rail are retractable.

As the technical solutions of a cargo storing and retrieval system, each vertical rail includes a rail body extending in the vertical direction. Each of at least one end of the rail body of one main cargo retrieval and placing apparatus facing the main cargo retrieval and placing apparatus adjacent to and on the same side with the one main cargo retrieval and placing apparatus is slidably connected to an adjustment rail. The vertical rail further includes an adjustment driving member. The adjustment driving member is configured to drive the adjustment rail to lift relative to the rail body to enable the vertical rail to switch between an initial state and an extended state. In response to the vertical rail being in the initial state, the main cargo retrieval and placing apparatus is in the first operation state. In response to the vertical rail being in the extended state, the main cargo retrieval and placing apparatus is in the second operation state.

As the technical solutions of a cargo storing and retrieval system, at least two shelves are disposed side by side and spaced apart in a second direction. A laneway is formed between two adjacent shelves among the at least two shelves. Multiple cargo retrieval and placing apparatuses in the laneway are each able to retrieve and place cargoes at multiple storage spaces on two sides of the laneway. The second direction is perpendicular to the first direction.

As the technical solutions of a cargo storing and retrieval system, one cargo retrieval and placing apparatus corresponding to at least one storage unit is an auxiliary cargo retrieval and placing apparatus. The auxiliary cargo retrieval and placing apparatus corresponds to an auxiliary retrieval and placing region. The auxiliary retrieval and placing region at least covers a lowest row of storage spaces among the plurality of rows of storage spaces.

As the technical solutions of a cargo storing and retrieval system, a retrieval and placing region of each cargo retrieval and placing apparatus among the plurality of cargo retrieval and placing apparatuses covers all of the at least one storage unit of a same shelf in a second direction. The auxiliary cargo retrieval and placing apparatus and a lowermost main cargo retrieval and placing apparatus that correspond to a same storage unit are located on two opposite sides of the shelf respectively. The second direction is perpendicular to the first direction.

Alternatively, at least two shelves are disposed side by side and spaced apart in the second direction. A laneway is formed between two adjacent shelves among the at least two shelves. Multiple cargo retrieval and placing apparatuses in the laneway are able to retrieve and place cargoes at multiple storage spaces on two sides of the laneway. The auxiliary cargo retrieval and placing apparatus and the lowermost main cargo retrieval and placing apparatus that correspond to the same storage unit are mounted on the two adjacent shelves respectively. The second direction is perpendicular to the first direction.

As the technical solutions of a cargo storing and retrieval system, corresponding to the same storage unit, an upper main cargo retrieval and placing apparatus adjacent to the lowermost main cargo retrieval and placing apparatus and the auxiliary cargo retrieval and placing apparatus are mounted on a same side of the same shelf and are spaced apart in the vertical direction.

As the technical solutions of a cargo storing and retrieval system, a main retrieval and placing region of a main cargo retrieval and placing apparatus that is adjacent to and on a same side with the auxiliary cargo retrieval and placing apparatus is separated from the auxiliary retrieval and placing region of the auxiliary cargo retrieval and placing apparatus in the vertical direction.

As the technical solutions of a cargo storing and retrieval system, in two main retrieval and placing areas adjacent to each other in the vertical direction and corresponding to a same storage unit, an average inbound and outbound frequency of a cargo in a main retrieval and placing region on a lower side is higher than an average inbound and outbound frequency of a cargo in a main retrieval and placing region on an upper side.

Moreover/alternatively, corresponding to the same storage unit, a row number of storage spaces covered by an uppermost main retrieval and placing region is n1, and a row number of storage spaces covered by a lowermost main retrieval and placing region is n2. n2 > n1.

As the technical solutions of a cargo storing and retrieval system, among all storage positions located in the first common retrieval and placing region, part of storage positions are transfer storage positions, and remaining storage positions are regular storage positions. Each transfer storage position is configured to place a cargo transferring from a main cargo retrieval and placing apparatus to another main cargo retrieval and placing apparatus. Each regular storage position is a target storage position of a cargo to be inbound.

As the technical solutions of a cargo storing and retrieval system, a temporary storage assembly is disposed at a bottom of the shelf and has a temporary storage position for placing the cargo. The temporary storage assembly has a side opening for the cargo to enter and exit the temporary storage position. The temporary storage position is located below a lowest row of storage spaces among the plurality of rows of storage spaces. A lowermost cargo retrieval and placing apparatus among the plurality of cargo retrieval and placing apparatuses is able to retrieve and place the cargo at the storage position through the side opening.

The cargo storing and retrieval system further includes a carrying vehicle able to retrieve the cargo at the temporary storage position or place the cargo into the temporary storage position through the side opening.

As the technical solutions of a cargo storing and retrieval system, a low-level passage is formed between a bottom of the temporary storage assembly and a ground of the cargo storing and retrieval system. A bottom opening communicating with the low-level passage is disposed at the bottom of the temporary storage assembly. The bottom opening communicates with the side opening.

The carrying vehicle is a lift-and-carry vehicle and is able to move into the low-level passage. A cargo carrier of the carrying vehicle is able to vertically enter and exit the temporary storage position through the bottom opening. The cargo carrier is able to carry the cargo to horizontally enter and exit the temporary storage position through the side opening.

As the technical solutions of a cargo storing and retrieval system, a passage for the carrying vehicle to run is formed between a bottom of the lowermost cargo retrieval and placing apparatus and the ground.

As the technical solutions of a cargo storing and retrieval system, each of two opposite sides of the temporary storage assembly in a second direction is provided with a side opening. The second direction is perpendicular to the first direction.

Moreover/alternatively, the temporary storage assembly includes two temporary storage brackets opposite to each other and spaced apart in the first direction. An upper end of each temporary storage bracket among the two temporary storage brackets is connected to the shelf. A lower end of the each temporary storage bracket is configured to support the cargo.

### BRIEF DESCRIPTION OF DRAWINGS

FIG. 1 is a side view of a cargo storing and retrieval system according to embodiment one of the present application.
FIG. 2 is a front view of the cargo storing and retrieval system according to embodiment one of the present application.
FIG. 3 is a view illustrating that shelves on two sides of the same laneway are in the extended state according to embodiment one of the present application.
FIG. 4 is a structural view of a transverse rail and a cargo retrieval and placing apparatus according to embodiment one of the present application.
FIG. 5 is a side view of a cargo storing and retrieval system according to embodiment two of the present application.
FIG. 6 is a view illustrating the layout and structure of a cargo retrieval and placing apparatus according to embodiment three of the present application.
FIG. 7 is a side view of a cargo storing and retrieval system according to embodiment five of the present application.
FIG. 8 is a structural view illustrating that a storing and retrieval mechanism is in an initial state according to embodiment six of the present application.
FIG. 9 is a structural view illustrating that a storing and retrieval mechanism is in an extended state according to embodiment seven of the present application.
FIG. 10 is a structural view of a single-deep shelf and a temporary storage assembly according to embodiment eight of the present application.
FIG. 11 is a structural view of the temporary storage assembly according to embodiment eight of the present application.

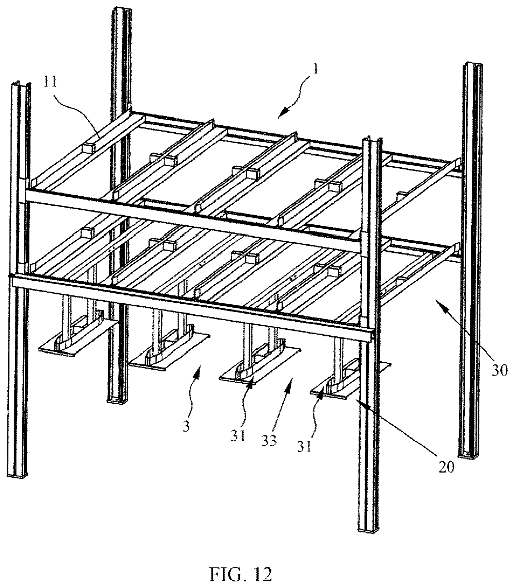

FIG. 12 is a structural view of a double-deep shelf and the temporary storage assembly according to embodiment eight of the present application.

### Reference list

- 1: shelf
- 11: cargo partition
- 12: storage space
- 121: storage position
- 122: first common retrieval and placing region
- 2: cargo retrieval and placing apparatus
- 2a: main cargo retrieval and placing apparatus
- 2b: auxiliary cargo retrieval and placing apparatus
- 21: walking mechanism
- 211: vertical rail
- 212: walking wheel
- 213: walking driving assembly
- 22: storing and retrieval mechanism
- 221: mounting bracket
- 222: retractable fork arm
- 223: sliding seat
- 224: retractable mechanism
- 3: temporary storage assembly
- 31: temporary storage position
- 32: temporary storage bracket
- 321: hanger
- 3211: mounting top beam
- 3212: mounting vertical beam
- 3213: mounting plate
- 322: bearer
- 3221: support portion
- 323: guide member
- 3231: side baffle portion
- 3232: guide plate portion
- 324: connector
- 33: bottom opening
- 34: connection beam
- 4: transverse rail
- 5: cargo
- 10: laneway
- 20: low-level passage
- 30: high-level passage

### DETAILED DESCRIPTION

In the description of the present application, unless otherwise expressly specified and limited, the term "connected to each other", "connected", or "fixed" is to be construed in a broad sense, for example, as fixedly connected, detachably connected, or integrated; mechanically connected or electrically connected; directly connected to each other or indirectly connected to each other via an intermediary; or internally connected between two elements or interaction relations between two elements. For those of ordinary skill in the art, meanings of the preceding terms in the present application may be understood according to situations.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as being "on", "above" or "over" the second feature, the first feature is right on, above or over the second feature, the first feature is obliquely on, above or over the second feature, or the first feature is simply at a higher level than the second feature. When the first feature is described as being "under", "below" or "underneath" the second feature, the first feature is right under, below or underneath the second feature, the first feature is obliquely under, below or underneath the second feature, or the first feature is simply at a lower level than the second feature.

In the description of this embodiment, the orientations or position relations indicated by terms such as "above", "below", "right", and the like are based on the drawings. These orientations or position relations are intended only to facilitate the description and simplify the operation and not to indicate or imply that a device or element referred to must have such specific orientations or must be configured or operated in such specific orientations. Thus, these orientations or position relations are not to be construed as limiting the present application. In addition, the terms "first" and "second" are used only for distinguishing between descriptions and have no special meaning.

### Embodiment one

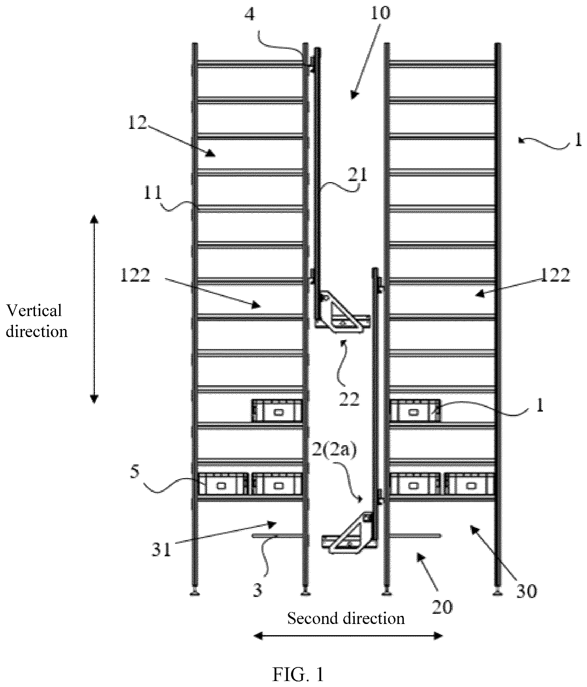

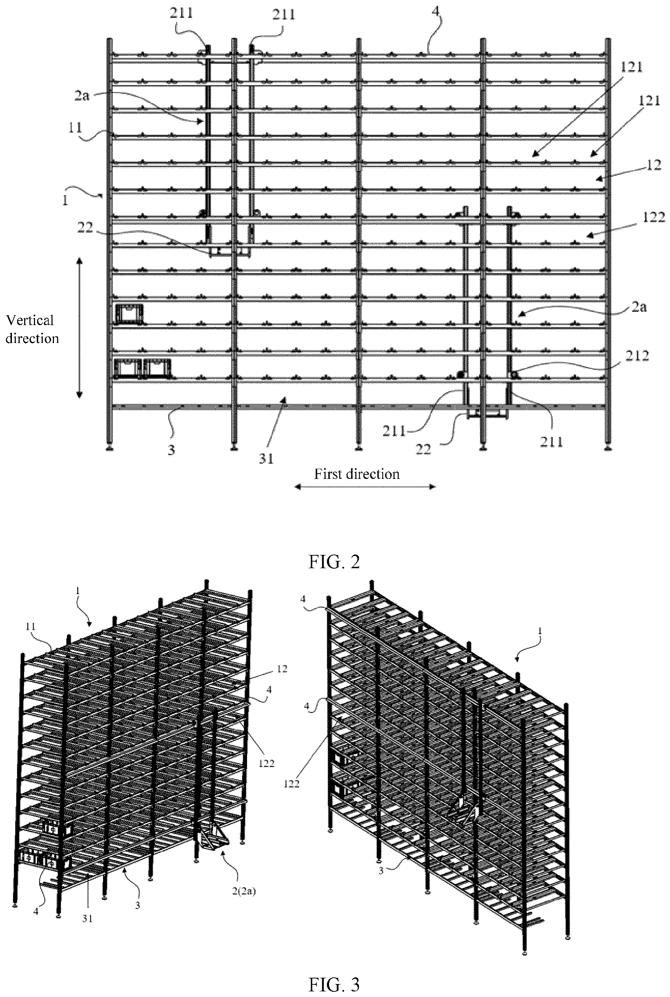

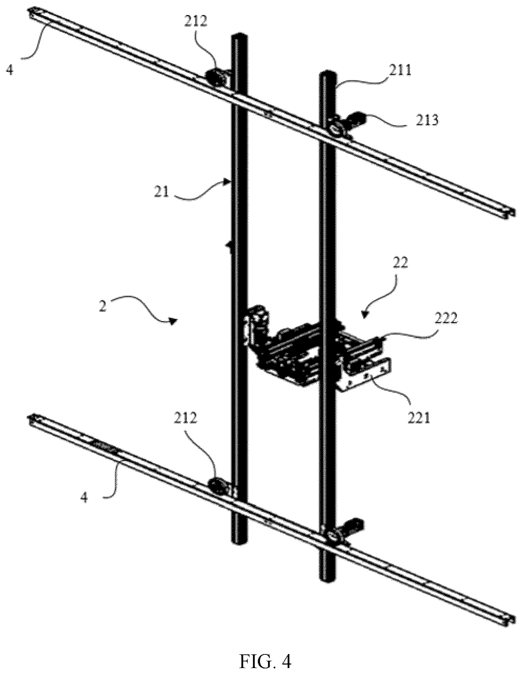

As shown in FIGS. 1 to 4, the present application provides a cargo storing and retrieval system so that a cargo storing and retrieval apparatus 2 implements the retrieval and placing of a cargo 5 on a shelf 1 through the movement of the cargo storing and retrieval apparatus 2 on the surface of the shelf 1, thereby implementing the inbound and outbound operations of the cargo 5. The cargo 5 refers to an integral unit that can be transported or carried and can be, for example, a bin containing a cargo, an empty bin, or an original packaging cargo stored separately.

The cargo storing and retrieval system includes a shelf 1 and a plurality of cargo retrieval and placing apparatuses 2. The shelf 1 has storage units. Each storage unit includes a plurality of rows of storage spaces 12 disposed in the vertical direction. Each row of storage spaces 12 includes a plurality of storage positions 121 disposed side by side in a first direction. Each storage unit is provided with at least two cargo retrieval and placing apparatuses 2 correspondingly. A cargo retrieval and placing apparatus 2 is a main cargo retrieval and placing apparatus 2a corresponding to a main retrieval and placing region. All main retrieval and placing regions corresponding to the respective storage unit are disposed sequentially from top to bottom and jointly cover all the storage spaces 12. Two adjacent main retrieval and placing regions overlap to cover at least one row of storage spaces 12 to form a first common retrieval and placing region 122. The main cargo retrieval and placing apparatus 2a is able to move along the surface of the shelf 1 to retrieve and place a cargo 5 that is at any storage position 121 and is in a main retrieval and placing region corresponding to the main cargo retrieval and placing apparatus 2a.

For the cargo storing and retrieval system provided in this embodiment, the main cargo retrieval and placing apparatus 2a can move along the surface of the shelf 1 to retrieve and place a cargo 5 at any storage position 121 in a storage space covered by the main retrieval and placing region corresponding to the main cargo retrieval and placing apparatus 2a; besides, all main retrieval and placing regions of all main cargo retrieval and placing apparatuses 2a jointly cover all the storage spaces 12. Therefore, the cargo inbound and outbound operations at any storage position 121 can be implemented through the movement of the main cargo retrieval and placing apparatuses 2a on the surface of the shelf 1, meeting the inbound and outbound requirements of a cargo 5, reducing the occupied space of the main cargo retrieval and placing apparatuses 2a, and reducing cost. Moreover, the main retrieval and placing regions are disposed sequentially from top to bottom to jointly cover all the storage spaces 12. Therefore, the height of a single main retrieval and placing region in the vertical direction can be reduced, thereby reducing the height of a respective main cargo retrieval and placing apparatus 2a in the vertical direction, avoiding the problems of deteriorated structural stability, reduced cargo retrieval and placing control precision, and low cargo retrieval and placing efficiency due to an excessive height of a single main cargo retrieval and placing apparatus 2a, improving the operation stability and reliability of the main cargo retrieval and placing apparatus 2a, and improving cargo retrieval and placing control precision. Part of the cargo retrieval and placing apparatuses 2 are disposed at a lower part of the shelf 1, reducing the overall gravity centers of the shelf 1 and the cargo retrieval and placing apparatuses 2 during the cargo retrieval at a high-layer storage space 12, preventing the shelf 1 from toppling, reducing the limit of the cargo retrieval and placing apparatuses 2 on the height of the shelf 1 so as to increase the height of the shelf 1, increasing the storage capacity of the cargo storing and retrieval system, and improving the efficiency of warehousing logistics. Additionally, when cargoes are stored and retrieved, multiple cargo retrieval and placing apparatuses 2 corresponding to the same storage unit can act simultaneously, completing the inbound and outbound operations of multiple cargoes 5 simultaneously, improving the inbound and outbound efficiency of cargoes 5, and thus improving the efficiency of logistics.

In this embodiment, at least two shelves 1 are disposed side by side and spaced apart in a second direction. A laneway 10 is formed between two adjacent shelves 1. A cargo retrieval and placing apparatus 2 located on one shelf 1 facing the other shelf 1 is located in the laneway, thereby increasing the capacity of cargoes 5 in the cargo storing and retrieval system. The first direction, the second direction, and the vertical direction are perpendicular to each other. In other embodiments, only one shelf 1 may be disposed in the cargo storing and retrieval system.

A shelf 1 has at least two cargo partitions 11 spaced apart in the vertical direction. One row of storage spaces 12 are formed between two adjacent cargo partitions 11. Each of the two sides of each cargo partition 11 in the second direction is provided with a frame beam. To facilitate the movement of a cargo retrieval and placing apparatus 2 on the surface of the shelf 1, a rail assembly is disposed on at least one side of the shelf 1. The rail assembly includes at least two transverse rails 4 spaced apart in the vertical direction. Rail assemblies correspond to cargo retrieval and placing apparatuses 2 in a one-to-one manner. The transverse rails are mounted on frame beams of the cargo partitions 11 and cover all storage positions 121 in the first direction. The structure of a shelf 1 may be set according to the related art and is not repeated here.

Each cargo retrieval and placing apparatus 2 includes a moving mechanism 21 and a storing and retrieval mechanism 22. The moving mechanism 21 is able to move on transverse rails 4 to implement the retrieval and placing of a cargo 5 at any column of storage positions 121 in a main retrieval and placing region by the storing and retrieval mechanism 22. The storing and retrieval mechanism 22 can lift vertically along the moving mechanism 21, thereby implementing the retrieval and placing of a cargo 5 at any row of storage spaces 12 in the main retrieval and placing region. That is, the movement of the moving mechanism 21 along the transverse rails 4 and the movement of the storing and retrieval mechanism 22 along the moving mechanism 21 in the vertical direction can implement the retrieval and placing of cargoes 5 at all storage positions 121 in the retrieval and placing region.

Each storing and retrieval mechanism 22 has the lowest limit position and the highest limit position relative to the lifting of a respective moving mechanism 21. When a storing and retrieval mechanism 22 is at the lowest limit position, a respective cargo retrieval and placing apparatus 2 has the lowest retrieval position; and when the storing and retrieval mechanism 22 is at the highest limit position, the cargo retrieval and placing apparatus 2 has the highest retrieval position. A storage space 12 corresponding to the lowest retrieval position of the cargo retrieval and placing apparatus 2, a storage space 12 corresponding to the highest retrieval position of the cargo retrieval and placing apparatus 2, and each storage space 12 between the storage space 12 corresponding to the lowest retrieval position and the storage space 12 corresponding to the highest retrieval position form a retrieval and placing region where the cargo retrieval and placing apparatus 2 can store and retrieve a cargo. A retrieval and placing region corresponding to a main cargo retrieval and placing apparatus 2a is a main retrieval and placing region.

For the same storage unit, for two main cargo retrieval and placing apparatuses 2a adjacent to each other in the vertical direction, the highest retrieval position of a main cargo retrieval and placing apparatus 2a on the lower side is equal to or higher than the lowest retrieval position of a main cargo retrieval and placing apparatus 2a on the upper side. In this case, the two main cargo retrieval and placing apparatuses 2a have at least one row of first common retrieval and placing regions 122.

A moving mechanism 21 includes two vertical rails 211 opposite to each other in the first direction and moving wheel mechanisms mounted on the vertical rails 211. The moving wheel mechanisms drive the vertical rails 211 to move along transverse rails 4. A respective storing and retrieval mechanism 22 can be mounted between the two vertical rails 211 in a movable manner vertically. A moving wheel mechanism includes a moving wheel 212 and a moving driving assembly 213. A vertical rail 211 is provided with a group of moving wheels 212. Each group of moving wheels 212 includes multiple moving wheels 212 corresponding to the transverse rails 4 in a one-to-one manner. At least one moving wheel is a driving wheel. The moving driving assembly drives the moving wheel 212 to move on a respective transverse rail 4.

In this embodiment, each cargo retrieval and placing apparatus 2 corresponds to two transverse rails 4 to reduce the number of transverse rails 4 and reduce cost. For each cargo retrieval and placing apparatus 2, two transverse rails 4 corresponding to the cargo retrieval and placing apparatus 2 are disposed at the upper and lower ends of a retrieval and placing region corresponding to the cargo retrieval and placing apparatus 2 so that the upper and lower ends of a respective moving mechanism 21 are stably and reliably supported, improving the operation stability of the cargo retrieval and placing apparatus 2. The distance between the two vertical rails 211 is greater than the distance between storage positions 121 in the first direction so that a cargo 5 carried by a respective storing and retrieval mechanism 22 can enter and exit a storage position 121 through the distance between the two vertical rails 211.

To reduce the cost of the cargo storing and retrieval system, in this embodiment, the cargo retrieval and placing apparatus 2 located in the laneway 10 can retrieve and place cargoes at storage units on the shelves 1 on two sides, thereby enabling cargoes on multiple shelves 1 to be stored and retrieved, reducing the number of required cargo retrieval and placing apparatuses 2, and reducing cost. The arrangement of a storing and retrieval mechanism 22 satisfying the two-way retrieval is relatively common in the art. The structure of such a storing and retrieval mechanism 22 is not limited or described in detail in the present application.

In other embodiments, it may be that a cargo retrieval and placing apparatus 2 on each shelf 1 can only retrieve and place cargoes 5 at storage units on the shelf 1, thereby simplifying the structure of a single cargo retrieval and placing apparatus 2 and enabling the shelf 1 and the cargo retrieval and placing apparatus 2 mounted on the shelf 1 to form an integral module. A user can select the number and arrangement mode of modules according to needs.

In this embodiment, in order to improve the efficiency of the cargo storing and retrieval system, a temporary storage assembly 3 is disposed at the bottom of a shelf 1 and has a temporary storage position 31 for placing a cargo 5. The temporary storage assembly 3 has a side opening for the cargo 5 to enter and exit the temporary storage position 31. The temporary storage position 31 is located below the lowest row of storage spaces 12. The lowermost cargo retrieval and placing apparatus 2 is able to retrieve and place the cargo at the storage position 31 through the side opening. The cargo storing and retrieval system further includes a carrying vehicle able to retrieve the cargo 5 out of the temporary storage position 31 or place the cargo 5 into the temporary storage position 31 through the side opening.

According to the cargo storing and retrieval system provided in this embodiment, when a cargo 5 needs to be outbound, if the target cargo 5 is located in a storage position 121 corresponding to a main retrieval and placing region at the lowermost layer, the requirements of retrieving and placing the cargo 5 can be met through the movement of the lowermost main cargo retrieval and placing apparatus 2a on the surface of the shelf. When the storage position 121 where the target cargo 5 is located in a main retrieval and placing region not at the lowermost layer, for example, in the second main retrieval and placing region from bottom to top, the lowermost main cargo retrieval and placing apparatus 2a first picks up the target cargo 5 at a target storage position 121 through the movement of the main cargo retrieval and placing apparatus 2a, corresponding to a main retrieval and placing region where the target storage position 121 is located, relative to the surface of the shelf 1. Then through the movement of the main cargo retrieval and placing apparatus 2a relative to the shelf 1, the main cargo retrieval and placing apparatus 2a transfers the target cargo 5 to a storage position 121 corresponding to a first common retrieval and placing region 122 jointly covered by an adjacent lower main cargo retrieval and placing apparatus 2a. Later, the lower main cargo retrieval and placing apparatus 2a moves to retrieve out the target cargo 5 in the first common retrieval and placing region 122 and transfer the target cargo 5 down to the temporary storage position 31. Finally, the carrying vehicle carries the target cargo 5 in the temporary storage position 31 to a target position of the next process.

When a cargo 5 needs to be inbound, the carrying vehicle first carries and places the cargo 5 to be inbound into the temporary storage position 31. If a target storage position 121 corresponding to the cargo 5 to be inbound is located in a main retrieval and placing region at the lowermost layer, the cargo 5 to be inbound is retrieved out of the temporary storage position 31 and then transferred into the target storage position 121 through the movement of the lowermost main cargo retrieval and placing apparatus 2a on the surface of the shelf 1. When the target storage position 121 is located in a main retrieval and placing region not at the lowermost layer, for example, in the second main retrieval and placing region from bottom to top, the lowermost main cargo retrieval and placing apparatus 2a first retrieves the cargo 5 to be inbound out of the temporary storage position 31 through the movement of the lowermost main cargo retrieval and placing apparatus 2a on the surface of the shelf 1 Then the cargo 5 to be inbound is transferred to a first common retrieval and placing region 122 jointly covered by an adjacent upper main cargo retrieval and placing apparatus 2a. Later, the upper main cargo retrieval and placing apparatus 2a acts to retrieve the target cargo 5 out of the first common retrieval and placing region 122 and transfer the target cargo 5 to the target storage position 121.

According to the cargo storing and retrieval system provided in this embodiment, with the arrangement of the temporary storage assembly 3 and the carrying vehicle, when a cargo 5 is outbound, the cargo 5 picked up by a cargo retrieval and placing apparatus from a storage position 121 can be temporarily stored in the temporary storage position 31 so that the carrying vehicle can transfer and convey the cargo 5 in the temporary storage position 31. The cargo retrieval and placing apparatus 2 does not need to directly dock with the carrying vehicle, thereby reducing the waiting time of the cargo retrieval by the cargo retrieval and placing apparatus 2, improving the cargo retrieval efficiency of the cargo retrieval and placing apparatus 2, and improving the outbound efficiency of the cargo 5. When a cargo 5 is inbound, the carrying vehicle can temporarily store the cargo 5 to be inbound into the temporary storage position 31 where the cargo 5 waits for an inbound operation performed by a cargo retrieval and placing apparatus 2 so that the carrying vehicle does not need to wait for docking with the cargo retrieval and placing apparatus 2, improving the efficiency of carrying the cargo 5 by the carrying vehicle, thereby improving the inbound efficiency of the cargo 5, and improving the efficiency of logistics.

In other embodiment, no temporary storage assembly 3 may be disposed at the bottom of a shelf 1. The carrying vehicle can dock with the lowermost main cargo retrieval and placing apparatus 2a to implement the transfer of a cargo 5 between the carrying vehicle and the lowermost main cargo retrieval and placing apparatus 2a.

In order to improve the convenience of carrying a cargo 5 in the temporary storage position 31, in this embodiment, the carrying vehicle is a hoisting carrying vehicle. That is, the carrying vehicle can move below the cargo 5 and hoist the cargo 5 to implement the carrying of the cargo 5. The carrying vehicle includes a moving chassis autonomously movable and a hoisting mechanism mounted on the moving chassis. The hoisting mechanism includes a cargo carrier and a jacking lift mechanism. The cargo carrier is located at the top of the moving chassis and is configured to dock with the bottom of the cargo 5. The jacking lift mechanism can drive the cargo carrier to lift so as to implement the separation or contact between the cargo carrier and the cargo 5. For the structure and operation manner of the hoisting carrying vehicle, reference may be made to the related art, which is not repeated here.

In other embodiments, the carrying vehicle may include a moving chassis and a retractable fork mounted on the moving chassis. The retractable fork is horizontally retractable to enable a cargo 5 to be transferred within the carrying vehicle and the temporary storage position 31. With this arrangement, when the carrying vehicle needs to retrieve and place the cargo 5 in the temporary storage position 31, the carrying vehicle runs to face the temporary storage position 31. Then the retractable fork extends to implement the switch of the cargo 5 between the carrying vehicle and the temporary storage position 31. With this arrangement, a relatively large space for the carrying vehicle running is not necessary to be reserved between the bottom of the temporary storage position 31 and the ground.

The carrying vehicle has a first height at which the cargo carrier is not raised relative to the moving chassis and a second height at which the cargo carrier is raised relative to the moving chassis. The second height is greater than the first height. Typically, the carrying vehicle is at the first height during the movement of the carrying vehicle with no load. When the carrying vehicle needs to dock with the cargo 5 in the temporary storage position 31, the cargo carrier is raised to enable the carrying vehicle to rise from the first height to the second height.

In order to facilitate the movement of the carrying vehicle at the bottom of the shelf 1, a high-level passage 30 is formed between the ground of the cargo storing and retrieval system and a position of the lowermost cargo partition 11 where no temporary storage assembly 3 is disposed. The height of the high-level passage 30 is greater than the second height so that the carrying vehicle can move relatively freely in the high-level passage 30. A low-level passage 20 is formed between the bottom of the temporary storage assembly 3 and the ground of the cargo storing and retrieval system. The low-level passage 20 is higher than the first height so that the carrying vehicle can enter a region below the temporary storage assembly 3 through the low-level passage 20 when the carrying vehicle is at the first height. A bottom opening 33 is disposed at the bottom of the temporary storage assembly 3. The cargo carrier of the carrying vehicle can enter and exit the temporary storage position 31 in a movable manner through the bottom opening 33 to get in touch with or separated from the bottom of the cargo 5 located in the temporary storage position 31. The cargo carrier can carry the cargo 5 to horizontally enter and exit the temporary storage position 31 through the side opening.

In this embodiment, a passage for the carrying vehicle to run is formed between the ground and the bottom of the lowermost cargo retrieval and placing apparatus 2. The height of the passage is greater than the second height to enable the carrying vehicle to run freely on the ground of the cargo storing and retrieval system.

In order to increase the warehousing density of the cargo storing and retrieval system, in the second direction, two outermost shelves 1 are single-deep shelves, and the remaining shelves 1 are double-deep shelves. A single-deep shelf indicates that each cargo partition 11 is provided with only one storage unit in the second direction. A double-deep shelf 1 indicates that each cargo partition 11 is provided with two storage units side by side in the second direction and that storage positions 121 in one storage unit correspond to storage positions 121 in the other storage unit in a one-to-one manner in the first direction.

For the double-deep shelf 1, in the second direction, one storage unit faces one laneway 10, and the other storage unit faces another laneway 10. A cargo retrieval and placing apparatus 2 corresponding to one laneway 10 only retrieves and places cargoes at a storage unit on one side facing the laneway 10. That is, cargos at storage units on two sides of the double-deep shelf 1 are retrieved and placed by cargo retrieval and placing apparatuses 2 on two sides of the shelf 1 respectively. With this arrangement, the retractable retrieval stroke of a storing and retrieval mechanism 22 does not need to be excessively great, thereby reducing the size of the storing and retrieval mechanism 22 in the second direction, thus reducing the width requirements of the laneway 10, and increasing the arrangement density of shelves 1.

In other embodiments, if the retractable stroke of the storing and retrieval mechanism 22 is sufficient, two or more storage units may be arranged side by side in the second direction on each cargo partition 11. The storing and retrieval mechanism 22 may retrieve and place cargoes in two adjacent storage units of the same shelf 1. Alternatively, retrieval and placing regions of cargo retrieval and placing apparatuses 2 cover all storage units of the same shelf 1 in the second direction.

Each laneway 10 may be correspondingly provided with one temporary storage assembly 3 or may be provided with two or more temporary storage assemblies 3. When multiple temporary storage assemblies 3 are provided, all the temporary storage assemblies 3 may be disposed at the bottom of one shelf 1 or may be dispersed at the bottom of two shelves 1. The number and arrangement positions of temporary storage assemblies 3 may be set flexibly according to the cargo storing and retrieval requirements of the cargo storing and retrieval system.

For the double-deep shelf 1, a temporary storage assembly 3 corresponding to one laneway 10 is disposed below a storage unit on one side of the bottom of the shelf 1 facing the laneway 10 so as to help a cargo retrieval and placing apparatus 2 to retrieve and place the cargo 5 in the temporary storage position 31. In the second direction, the temporary storage assembly 3 is adjacent to the high-level passage 30, so as to facilitate an action of the carrying vehicle, such as a U-turn or a steering maneuver, in the high-level passage 30 adjacent to the temporary storage position 31, reducing the movement limit of the carrying vehicle in the cargo storing and retrieval system and improving the path planning flexibility of the carrying vehicle.

When the cargo storing and retrieval system includes only one shelf 1, the temporary storage assembly 3 is disposed at the bottom of the shelf 1. When the shelf 1 is a double-deep shelf, the temporary storage assembly 3 is disposed below a storage unit on a side corresponding to the lowermost cargo retrieval and placing apparatus 2 corresponding to the shelf 1.

In order to reduce the interference between two cargo retrieval and placing apparatuses 2 in the same laneway 10, in this embodiment, at least one storage unit has two adjacent main cargo retrieval and placing apparatuses 2a that are movable on two shelves 1 and have a first common retrieval and placing region. With this arrangement, even if the lower end of a moving mechanism 21 on the upper side is lower than the upper end of a moving mechanism 21 on the adjacent lower side, the two moving mechanisms 21 do not interfere with each other. In this case, the arrangement of positions of corresponding ends of the moving mechanisms 21 of the two adjacent main cargo retrieval and placing apparatuses 2a is not limited when the two adjacent main cargo retrieval and placing apparatuses 2a retrieve and place cargoes 5 in the common retrieval and placing regions, improving the flexibility of the structural arrangement of the cargo retrieval and placing apparatuses 2.

In this embodiment, corresponding to the same storage unit, among two adjacent main cargo retrieval and placing apparatuses 2a, the lower end of a vertical rail 211 of a main cargo retrieval and placing apparatus 2a on the upper side is lower than the upper end of a vertical rail 211 of a main cargo retrieval and placing apparatus 2a on the lower side. Such an arrangement guarantees that when a storing and retrieval mechanism 22 moves to the highest retrieval position or the lowest retrieval position, a respective vertical rail 211 can effectively support the storing and retrieval mechanism 22, improving the reliability of the storing and retrieval mechanism 22 operating to the highest retrieval position or the lowest retrieval position. Moreover, this arrangement can reduce the limit of the connection position of the storing and retrieval mechanism 22 and the vertical rail 211 relative to the arrangement position of a retractable fork arm 222 of the storing and retrieval mechanism 22 in the vertical direction, thereby improving the design flexibility of the main cargo retrieval and placing apparatuses 2a and improving the universality of the main cargo retrieval and placing apparatuses 2a.

The upper end of a vertical rail 211 of the uppermost main cargo retrieval and placing apparatus 2a is higher than the uppermost row of storage spaces 12, thereby guaranteeing that the cargo storing and retrieval reliability of the uppermost main cargo retrieval and placing apparatus 2a at the uppermost row of storage spaces 12. A vertical rail 211 of the lowermost main cargo retrieval and placing apparatus 2a extends below the temporary storage position 31 to better guarantee the cargo storing and retrieval reliability of the main cargo retrieval and placing apparatus 2a at the temporary storage position 31.

In this embodiment, D denotes the width of a cargo retrieval and placing apparatus 2 in the second direction. The width of a laneway 10 in the second direction is 1.1 D to 1.5 D so as to prevent the storing and retrieval mechanism 22 of one cargo retrieval and placing apparatus 2 from interfering with a vertical rail 211 of a main cargo retrieval and placing apparatus 2a on the other side of the laneway 10, guaranteeing the operation reliability of all cargo retrieval and placing apparatuses 2.

The width of a laneway 10 is less than twice the width of a cargo retrieval and placing apparatus 2. Therefore, storing and retrieval mechanisms 22 of two opposite cargo retrieval and placing apparatuses 2 cannot operate to positions opposite to each other both in the second direction and the vertical direction. Accordingly, in the process of cargo retrieval and placing, the operating trajectories of the cargo retrieval and placing apparatuses 2 on the surface of the shelf 1 and the lifting of the storing and retrieval mechanisms 22 on respective moving mechanisms 21 can be controlled, avoiding the collision of the two opposite storing and retrieval mechanisms 22.

To reduce cost, in this embodiment, main retrieval and placing regions of two adjacent main cargo retrieval and placing apparatuses 2a overlap to cover one row of storage spaces 12 in the vertical direction. In this case, the main retrieval and placing regions of the two main cargo retrieval and placing apparatuses 2a overlap each other; moreover, the two main cargo retrieval and placing apparatuses 2a are prevented from overlapping each other excessively and causing an increase in the height of the main cargo retrieval and placing apparatuses 2a in the vertical direction. In other embodiments, main retrieval and placing regions of two adjacent main cargo retrieval and placing apparatuses 2a may cover two or more rows of storage spaces 12 in the vertical direction.

In a first common retrieval and placing region 122 formed by two vertically adjacent main cargo retrieval and placing apparatuses 2a, part of the storage positions 121 are transfer storage positions, and the remaining storage positions 121 are regular storage positions. Each regular storage position can temporarily store a cargo 5 in daily life, that is, serve as a target storage position 121 of a cargo 5 to be inbound. Each transfer storage position is configured for the transfer of a cargo 5 between two adjacent main cargo retrieval and placing apparatuses 2a. That is, when a target cargo 5 is located at a storage position 121 in an upper main retrieval and placing region, a main cargo retrieval and placing apparatus 2a on the upper side first transfers the target cargo 5 in the upper main retrieval and placing region to a transfer storage position. Then a main cargo retrieval and placing apparatus 2a transfers the cargo 5 in the transfer storage position to a transfer storage position on the lower side or the temporary storage position 31. The arrangement of the transfer storage positions can prevent all the storage positions 121 in the first common retrieval and placing region 122 from being occupied by non-target cargoes 5 and thus making the target cargo 5 difficult to be transferred between the two main cargo retrieval and placing apparatuses 2a. Moreover, such an arrangement can also reduce the probability that the two adjacent main cargo retrieval and placing apparatuses 2a approach each other or even collide with each other, improving the operation reliability of the main cargo retrieval and placing apparatuses 2a.

Multiple transfer storage positions may be arranged continuously or may be partially dispersed in the first direction. The number or arrangement positions of transfer storage positions may be set according to the inbound and outbound requirements of warehousing and logistics, which is not limited in the present application.

In order to reduce the probability of the toppling of the shelf 1, in this embodiment, the row number of storage spaces 12 covered by the main retrieval and placing region of the uppermost main cargo retrieval and placing apparatus 2a is n1, and the row number of storage space 12 covered by the main retrieval and placing region of the lowermost main cargo retrieval and placing apparatus 2a is n2. n1 < n2. Such an arrangement can guarantee that all main retrieval and placing regions cover all storage positions 121 and can reduce the height of the uppermost main cargo retrieval and placing apparatus 2a in the vertical direction, thereby lowering the center of gravity of the entirety formed by the shelf 1 and all cargo retrieval and placing apparatuses 2 and thus reducing the probability of the toppling of the shelf 1.

For each cargo storing and retrieval system, different cargoes 5 have different inbound and outbound frequencies. As usual, part of the cargoes 5 are high-frequency inbound and outbound cargoes 5, and part of the cargoes 5 are low-frequency inbound and outbound cargoes 5. To optimize the efficiency of the cargo storing and retrieval system, in this embodiment, in two main retrieval and placing regions adjacent to each other in the vertical direction, the average inbound and outbound frequency of cargoes 5 in all storage positions 121 in a main retrieval and placing region on the lower side is higher than the average inbound and outbound frequency of cargoes 5 in all storage positions 121 in a main retrieval and placing region on the upper side. Such an arrangement enables cargoes 5 with high inbound and outbound frequencies to be placed at lower main retrieval and placing regions, reducing the number of main cargo retrieval and placing apparatuses 2a required by these cargoes 5 and thereby enhancing overall inbound and outbound efficiency.

In an embodiment, a storing and retrieval mechanism 22 includes a mounting bracket 221, retractable fork arms 222, and a toggle and fork assembly. The mounting bracket 221 is slidably mounted on vertical rails 211. Two opposite retractable fork arms 222 are provided and each can be retractable in the second direction. A retractable end of each retractable fork arm 222 is movably mounted with the toggle and fork assembly. The toggle and fork assembly is switchable between a toggle position extending between a toggle position of the two retractable fork arms 222 and an idle position retracted relative to the toggle position. When a respective cargo 5 in a storage position 121 needs to be retrieved out, the storing and retrieval mechanism 22 moves to a position where the retractable fork arms 222 are opposite to the storage position 121 in height. The two retractable fork arms 222 each extend toward the storage position 121 in the second direction so that the two retractable fork arms 222 are placed on two opposite sides of the cargo 5. Upon full extension of the retractable fork arms 222, the toggle and fork assembly switches to the toggle position so that the toggle and fork assembly can abut against the back of the cargo 5. The retractable fork arms 222 are retracted to toggle the cargo 5 to move from the storage position 121 onto the mounting bracket 221. The process in which the storing and retrieval mechanism 22 places a cargo 5 on the mounting bracket 221 to a storage position 121 is basically a reverse process and is not described here. The structure of a storing and retrieval mechanism 22 for transferring a cargo 5 between a shelf 1 and a mounting bracket 221 through retractable fork arms 222 and a toggle and fork assembly is relatively common in the related art. The type and structure of a storing and retrieval mechanism 22 are not limited in the present application.

In another embodiment, a storing and retrieval mechanism 22 includes a mounting bracket 221, a retractable assembly, and a cargo retrieval member. An engagement member engaging with the cargo retrieval member is disposed on the front side of a cargo 5 or on each of left and right sides of the cargo 5. The mounting bracket 221 is slidably mounted on vertical rails 211. The retractable assembly can drive the cargo retrieval member to extend in the first direction to be connected to the engagement member. In this case, through the connection between the cargo retrieval member and the engagement member, the retractable assembly can drag a cargo 5 in a storage position 121 onto the mounting bracket 221 by getting retracted in the direction away from the shelf 1 or push a cargo 5 on the mounting bracket 221 into a storage position 121 by extending in the direction toward the shelf 1. The engagement between the cargo retrieval member and the engagement member may be, for example, a hook, a snap, or a magnetic connection.

In another embodiment, a storing and retrieval mechanism 22 includes a mounting bracket 221 and retractable fork arms 222. The mounting bracket 221 is slidably mounted on vertical rails 211. The retractable fork arms 222 are retractably mounted on the mounting bracket 221 in the second direction. When picking up a cargo 5 in a storage position 121, the storing and retrieval mechanism 22 first moves to face the storage position 121. The retractable fork arms 222 extend into the storage position 121 in the second direction and are positioned below the cargo 5. Then the retractable fork arms 222 rise to raise the cargo 5 to be separated from the shelf 1. Later, the retractable fork arms 222 are retracted to drive the cargo 5 onto the mounting bracket 221. When the cargo 5 on the mounting bracket 221 is transferred into the storage position 121, the retractable fork arms 222 carry the cargo 5 above the retractable fork arms 222 to extend into the storage position 121. The retractable fork arms 222 lower to drive the cargo 5 to be supported on the shelf 1 and are separated from the cargo 5. The retractable fork arms 222 are retracted to the initial position. During the lifting process of the cargo 5, the retractable fork arms 222 may lift relative to the mounting bracket 221; alternatively, the entire storing and retrieval mechanism 22 may lift to drive the retractable fork arms 222 to lift.

In the related art, many structures of storing and retrieval mechanisms 22 can implement the transfer of a shelf 1 between cargo retrieval and placing apparatus 2. The structure of a storing and retrieval mechanism 22 is not limited or described in detail in the present application as long as the storing and retrieval mechanism 22 can implement the retrieval and placing of a cargo 5 at a storage position 121.

### Embodiment two

This embodiment provides a cargo storing and retrieval system. Moreover, the basic arrangement of the cargo storing and retrieval system provided in this embodiment is the same as the basic arrangement of the cargo storing and retrieval system in embodiment one, and only part of the arrangement is different. In this embodiment, the same content as that in embodiment one is not repeated.

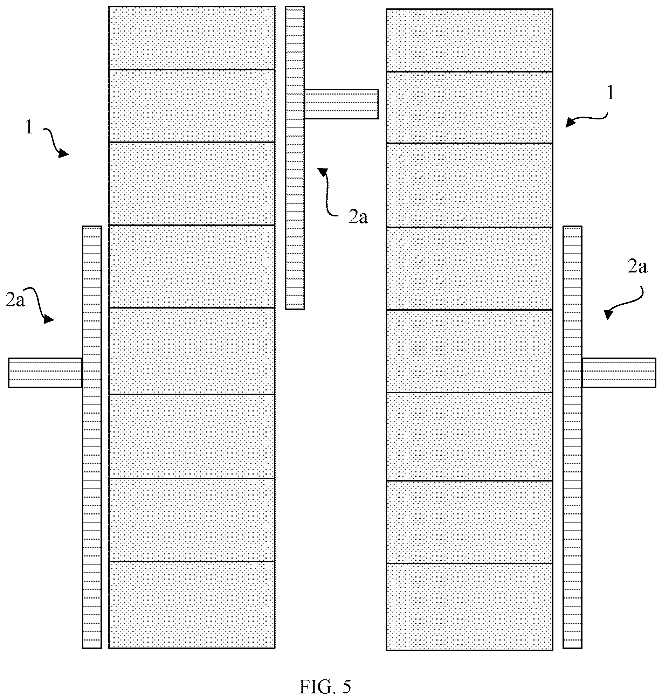

As shown in FIG. 5, in this embodiment, at least one storage unit has two adjacent main cargo retrieval and placing apparatuses 2a respectively movable on two opposite sides of the same shelf 1 and having a first common retrieval and placing region. Moreover, main retrieval and placing regions of the two main cargo retrieval and placing apparatuses 2a can cover all storage units of the same shelf 1 in the second direction.

That is, in this embodiment, for cargo retrieval and placing apparatuses 2 of some storage units, main retrieval and placing regions of these cargo retrieval and placing apparatuses 2 cover the same region of all storage units on the same shelf 1 in the vertical direction, therefore implementing the retrieval and placing of cargoes on two sides of the shelf 1, reducing the number of cargo retrieval and placing apparatuses 2, and reducing cost. Moreover, two main cargo retrieval and placing apparatuses 2a that are adjacent to each other in the vertical direction and correspond to the same storage unit are located on two opposite sides of the shelf 1 respectively so that the two main cargo retrieval and placing apparatuses 2a adjacent to each other in the vertical direction are movable on two opposite sides of the shelf 1 respectively and do not interfere with each other, thereby implementing the cargo retrieval in the same first common retrieval and placing region by the two adjacent main cargo retrieval and placing apparatuses 2a and reducing the arrangement limit of main cargo retrieval and placing apparatuses 2a.

In this embodiment, at least two shelves 1 are opposite to each other and are spaced apart in the second direction. A laneway 10 is formed between two adjacent shelves 1. A main cargo retrieval and placing apparatus 2a located in the laneway 10 between the two adjacent shelves 1 is set to be a first main cargo retrieval and placing apparatus and can retrieve and place cargoes on the shelves 1 on two sides. A main cargo retrieval and placing apparatus 2a adjacent to the first main cargo retrieval and placing apparatus in the vertical direction is a second main cargo retrieval and placing apparatus. The second main cargo retrieval and placing apparatus and the first main cargo retrieval and placing apparatus that are on the same shelve 1 are located on opposite sides of the same shelve respectively. In this case, only one first main cargo retrieval and placing apparatus 2a exists in the laneway 10 between the two shelves 1. Alternatively, main retrieval and placing regions of at least two main cargo retrieval and placing apparatuses 2a in the same laneway 10 are separated from each other in the vertical direction, reducing the interference between the two main cargo retrieval and placing apparatuses 2a.

That is, by way of example, two main cargo retrieval and placing apparatuses 2a are provided for each storage unit. When a main cargo retrieval and placing apparatus 2a on the upper side is a first main cargo retrieval and placing apparatus, a main cargo retrieval and placing apparatus 2a on the lower side of each shelf 1 is a second main cargo retrieval and placing apparatus. Each of the two second main cargo retrieval and placing apparatuses on the two shelves 1 is located on one side of a respective shelf 1 facing away from a respective first main cargo retrieval and placing apparatus. One first main cargo retrieval and placing apparatus and one second main cargo retrieval and placing apparatus that are on one shelf 1 are movable on opposite surfaces of the shelf 1, and another second main cargo retrieval and placing apparatus is located on the other shelf 1.

In another embodiment, two main cargo retrieval and placing apparatuses 2a having a first common retrieval and placing region may be disposed in a laneway 10. Moreover, main cargo retrieval and placing apparatuses 2a are movable on surfaces of two sides of a shelf 1 on at least one side of the laneway 10. Main cargo retrieval and placing apparatuses 2a on surfaces of two sides of the same shelf 1 have a first common retrieval and placing region.

In another embodiment, all storage units each have two main cargo retrieval and placing apparatuses 2a that are respectively movable on two opposite sides of the same shelf 1 and are adjacent to each other in the vertical direction. That is, at least two main cargo retrieval and placing apparatuses 2a are disposed in a laneway 10, and two main cargo retrieval and placing apparatuses 2a are adjacent to each other in the vertical direction. With this arrangement, the two main cargo retrieval and placing apparatuses 2a that are located in the laneway 10 and are adjacent to each other may have a first common retrieval and placing region; alternatively, main retrieval and placing regions of the two main cargo retrieval and placing apparatuses 2a may be separated from each other in the vertical direction.

A shelf 1 may be a single-deep shelf; that is, the shelf 1 has one storage unit. A shelf 1 may also be a double-deep shelf; that is, each cargo retrieval and placing apparatus 2 may retrieve and place cargoes at two storage units disposed side by side in the second direction. When multiple shelves are disposed side by side in the second direction, the outermost two shelves 1 are single-deep shelves, and each shelf 1 in the middle is a double-deep shelf.

### Embodiment three

This embodiment provides a cargo storing and retrieval system. Moreover, the basic arrangement of the cargo storing and retrieval system provided in this embodiment is the same as the basic arrangement of the cargo storing and retrieval system in embodiment one, and only part of the arrangement is different. In this embodiment, the same content as that in embodiment one is not repeated.

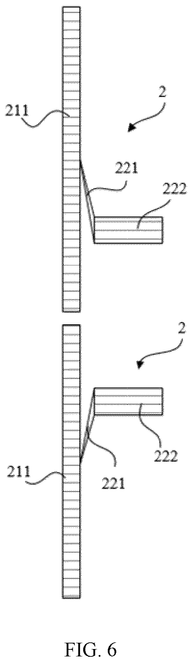

As shown in FIG. 6, the arrangement manner of a main cargo retrieval and placing apparatus 2a is different from that in embodiment one. At least part of two main cargo retrieval and placing apparatuses 2a adjacent to each other in the vertical direction are disposed on the same side of a shelf 1. Moreover, among the two adjacent main cargo retrieval and placing apparatuses 2a, the lower end of a moving mechanism of a main cargo retrieval and placing apparatus 2a on the upper side is higher than the upper end of a moving mechanism of a main cargo retrieval and placing apparatus 2a on the lower side. A storing and retrieval mechanism 22 of the main cargo retrieval and placing apparatus 2a on the upper side can extend downward out from the respective moving mechanism 21 to retrieve and place a cargo at a storage position 121 in a common retrieval and placing region. Moreover/alternatively, a storing and retrieval mechanism 22 of the main cargo retrieval and placing apparatus 2a on the lower side can extend upward out from the respective moving mechanism 21 to retrieve and place a cargo at a storage position 121 in the common retrieval and placing region.

In this embodiment, moving mechanisms 21 of the two adjacent main cargo retrieval and placing apparatuses 2a are spaced apart, preventing the two main cargo retrieval and placing apparatuses 2a from interfering with each other when the two adjacent main cargo retrieval and placing apparatuses 2a are disposed on the same side. Moreover, the arrangement in which the storing and retrieval mechanism 22 on the upper side extends downward out from the respective moving mechanism 21 and/or the storing and retrieval mechanism 22 on the lower side extends upward out from the respective moving mechanism 21 enables the two main cargo retrieval and placing apparatuses 2a to have an overlapping common retrieval and placing region.

That is, in this embodiment, the two adjacent main cargo retrieval and placing apparatuses 2a may be disposed on the same side of the shelf 1 or on two opposite sides of the shelf 1. When multiple shelves 1 are disposed side by side, the two main cargo retrieval and placing apparatuses 2a adjacent to each other in the vertical direction may also be disposed on two opposite sides of a laneway 10 or on the same side of the laneway 10, improving the arrangement flexibility of the main cargo retrieval and placing apparatuses 2a.

In this embodiment, two main cargo retrieval and placing apparatuses 2a in the same laneway 10 are provided. A storing and retrieval mechanism 22 of a main cargo retrieval and placing apparatus 2a on the lower side can extend upward out from a respective vertical rail 211. A storing and retrieval mechanism 22 of a main cargo retrieval and placing apparatus 2a on the upper side can extend downward out from a respective vertical rail 211. Such an arrangement can reduce the height of the storing and retrieval mechanism 22 on the lower side extending upward out from the respective vertical rail 211 and reduce the height of the storing and retrieval mechanism 22 on the upper side extending downward out from the respective vertical rail 211, prevent an excessive height of a storing and retrieval mechanism 22 extending out from a respective vertical rail 211 from causing the deteriorated arrangement stability of the storing and retrieval mechanism 22 on a respective moving mechanism 21 and causing increasing structural complexity, reduce the arrangement height of each main cargo retrieval and placing apparatus 2a, and improving the operating and use stability of the main cargo retrieval and placing apparatuses 2a.

For the main cargo retrieval and placing apparatus 2a on the upper side, a slidable connection position between the vertical rail 211 and a respective mounting bracket 221 of the storing and retrieval mechanism 22 is higher than the position of a respective retractable fork arm 222 of the storing and retrieval mechanism 22. In this case, when the mounting bracket 221 slides to the lowest cargo retrieval position of the storing and retrieval mechanism 22 relative to the vertical rail 211, the retractable fork arm 222 can be opposite to a first common retrieval and placing region 122.

For the main cargo retrieval and placing apparatus 2a on the lower side, a slidable connection position between the vertical rail 211 and a respective mounting bracket 221 of the storing and retrieval mechanism 22 is higher than the position of a respective retractable fork arm 222 of the storing and retrieval mechanism 22.

### Embodiment four

This embodiment provides a cargo storing and retrieval system. Moreover, the cargo storing and retrieval system provided in this embodiment is a refinement of the cargo storing and retrieval system in embodiment one. In this embodiment, the same content as that in embodiment one is not repeated.

At least one storage unit has two main cargo retrieval and placing apparatuses 2a that are movable on the same surface of the same shelf 1 and are adjacent to each other in the vertical direction. Moreover, at least one main cargo retrieval and placing apparatus 2a is switchable between a first operation state and a second operation state. When one main cargo retrieval and placing apparatus 2a is in the first operation state, the main cargo retrieval and placing apparatus 2a and a main cargo retrieval and placing apparatus 2a adjacent to the main cargo retrieval and placing apparatus 2a on the same side of the same shelf 1 are spaced apart in the vertical direction. When the main cargo retrieval and placing apparatus 2a is in the second operation state, the main cargo retrieval and placing apparatus 2a partially overlaps a main cargo retrieval and placing apparatus 2a that is adjacent in the vertical direction to and on the same side of the same shelf 1 with the main cargo retrieval and placing apparatus 2a.

That is, in this embodiment, at least one main cargo retrieval and placing apparatus 2a is switchable between the first operation state and the second operation state so as to prevent two main cargo retrieval and placing apparatuses 2a on the same side from interfering with each other. Moreover, the switch of one main cargo retrieval and placing apparatus 2a to the second operation state guarantees that the main cargo retrieval and placing apparatus 2a implements the retrieval and placing of a cargo 5 at a storage position 121 in a first common retrieval and placing region 122, improving the arrangement convenience and arrangement flexibility of the main cargo retrieval and placing apparatuses 2a.

In this embodiment, at least one end of each vertical rail 211 of a respective main cargo retrieval and placing apparatus 2a facing a main cargo retrieval and placing apparatus 2a that is adjacent to and on the same side with the respective main cargo retrieval and placing apparatus 2a is retractable to enable the respective main cargo retrieval and placing apparatus 2a to switch between the first operation state and the second operation state. That is, in this embodiment, a change in the length of the vertical rail 211 is implemented through the retraction at an end of the vertical rail 211, thereby adjusting the operation stroke of a respective retrieval and placing mechanism and thus enabling the respective main cargo retrieval and placing apparatus 2a to switch between the first operation state and the second operation state. Such an adjustment manner and adjustment structure are simple, are easy to implement, and occupy a relatively small space.

The vertical rail 211 includes a rail body and an adjustment rail. A respective moving wheel 121 is mounted on the rail body. Each of at least one end of the rail body of the respective main cargo retrieval and placing apparatus 2a facing the main cargo retrieval and placing apparatus 2a adjacent to and on the same side with the respective main cargo retrieval and placing apparatus 2a is slidably connected to the adjustment rail. The vertical rail 211 further includes an adjustment driving member. The adjustment driving member drives the adjustment rail to lift relative to the rail body to enable the vertical rail 211 to switch between an initial state and an extended state. When the vertical rail 211 is in the initial state, the respective main cargo retrieval and placing apparatus 2a is in the first operation state. When the vertical rail 211 is in the extended state, the respective main cargo retrieval and placing apparatus 2a is in the second operation state.

The vertical rail 211 has a simple structure and low cost. Moreover, with the arrangement of the adjustment driving member, the length of the vertical rail 211 can be adjusted automatically, resulting in a high automation degree. The structure of an adjustment driving member that can implement the sliding of an adjustment rail relative to a rail body is relatively common. The mounting structure of an adjustment rail and a rail body and the structure of an adjustment driving member are not limited in this embodiment.

That is, in this embodiment, the adjustment rail is disposed at an end of the rail body. When no cargo 5 at a storage position 121 in the first common retrieval and placing region 122 needs to be retrieved or placed, the adjustment rail is retractable relative to the rail body to prevent two adjacent main cargo retrieval and placing apparatuses 2a from interfering with each other. When the respective main cargo retrieval and placing apparatus 2a needs to retrieve and place a cargo 5 at a storage position 121 in the first common retrieval and placing region 122, the adjustment rail extends upward relative to the rail body so that the respective storing and retrieval mechanism 22 can move along the adjustment rail to a position opposite to the common retrieval and placing region.

In other embodiments, a storing and retrieval mechanism 22 includes a mounting bracket 221, a lifting mechanism, and a cargo storing and retrieval assembly. The mounting bracket 221 is slidably mounted on two vertical rails 211 in the vertical direction. The cargo storing and retrieval assembly is retractable in the second direction to implement the transfer of a cargo 5 between the storing and retrieval mechanism 22 and a respective shelf 1. The lifting mechanism is mounted between the mounting bracket 221 and the cargo storing and retrieval assembly to enable the storing and retrieval mechanism 22 to lift vertically relative to the mounting bracket 221, thereby enabling the cargo storing and retrieval assembly to switch between a high-level cargo retrieval position and a low-level cargo retrieval position. The height of the cargo storing and retrieval assembly at the high-level cargo retrieval position and relative to the mounting bracket 221 is greater than the height of the cargo storing and retrieval assembly at the low-level cargo retrieval position and relative to the mounting bracket 221. When the cargo storing and retrieval assembly is at the high-level cargo retrieval position, the respective cargo retrieval and placing apparatus 2 is in the second operation state. When the cargo storing and retrieval assembly is at the low-level cargo retrieval position, the respective cargo retrieval and placing apparatus 2 is in the first operation state.

### Embodiment five

This embodiment provides a cargo storing and retrieval system. Moreover, the cargo storing and retrieval system provided in this embodiment is a refinement of the cargo storing and retrieval system in embodiment one. In this embodiment, the same content as that in embodiment one is not repeated.

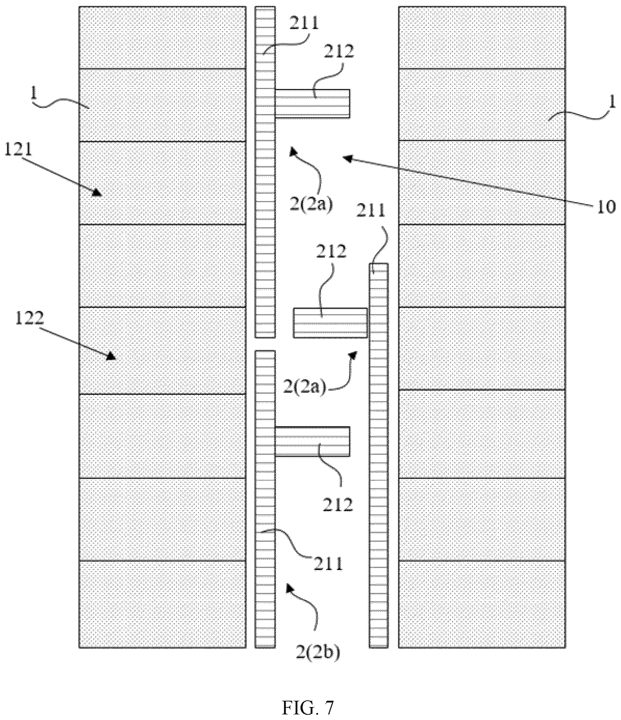

As shown in FIG. 7, in this embodiment, a storage position 121 corresponding to a main retrieval and placing region on the lower side is configured to store a cargo 5 with a relatively high inbound and outbound frequency. In order to increase the inbound and outbound frequencies of lower storage spaces 12 on a shelf 1, at least one of multiple cargo retrieval and placing apparatuses 2 corresponding to one storage unit is an auxiliary cargo retrieval and placing apparatus 2b having an auxiliary retrieval and placing region. The auxiliary retrieval and placing region at least covers the lowest row of storage spaces 12.

The preceding arrangement enables a main retrieval and placing region of the lowermost main cargo retrieval and placing apparatus 2a and the auxiliary retrieval and placing region of the auxiliary cargo retrieval and placing apparatus 2b to overlap to form a second common retrieval and placing region. In this case, a target cargo 5 to be outbound is located in the second common retrieval and placing region. An outbound operation may be performed on the target cargo 5 either by the lowermost main cargo retrieval and placing apparatus 2a or by the auxiliary cargo retrieval and placing apparatus 2b. When a target storage position 121 of a cargo 5 to be inbound is located in the second common retrieval and placing region, the cargo 5 may be transferred to the target storage position 121 either by the lowermost main cargo retrieval and placing apparatus 2a or by the auxiliary cargo retrieval and placing apparatus 2b. Therefore, the waiting time of a cargo 5 getting inbound and outbound is reduced, improving the inbound and outbound efficiency of the cargo 5. Moreover, simultaneous actions of the lowermost main cargo retrieval and placing apparatus 2a and the auxiliary cargo retrieval and placing apparatus 2b implement simultaneous inbound and outbound operations of two cargoes 5, further improving the efficiency of logistics.

In this embodiment, in the same laneway 10, the lowermost main cargo retrieval and placing apparatus 2a and the auxiliary cargo retrieval and placing apparatus 2b are mounted on two shelves 1 respectively. That is, the two shelves 1 on two sides of the laneway 10 are a first shelf 1 and a second shelf 1 respectively. The auxiliary cargo retrieval and placing apparatus 2b moves on the surface of the first shelf 1. The lowermost main cargo retrieval and placing apparatus 2a moves on the surface of the second shelf 1. Such an arrangement can effectively avoid the interference between the auxiliary cargo retrieval and placing apparatus 2b and the main cargo retrieval and placing apparatus 2a and guarantee the operation safety and reliability of each cargo retrieval and placing apparatus 2.

In this embodiment, main cargo retrieval and placing apparatuses 2a that are located in the same laneway 10 and are adjacent to each other in the vertical direction are located on the two shelves 1 respectively. That is, the auxiliary cargo retrieval and placing apparatus 2b and a main cargo retrieval and placing apparatus 2a on the upper side and adjacent to the lowermost main cargo retrieval and placing apparatus 2a are mounted on the same shelf 1. In order to avoid the interference between the auxiliary cargo retrieval and placing apparatus 2b and the main cargo retrieval and placing apparatus 2a, the auxiliary cargo retrieval and placing apparatus 2b and an adjacent main cargo retrieval and placing apparatus 2a on the same side are spaced apart in the vertical direction.

The upper end of a vertical rail 211 of the auxiliary cargo retrieval and placing apparatus 2b is lower than a lower end of a vertical rail 211 of the adjacent main cargo retrieval and placing apparatus 2a on the same side to prevent vertical rails 211 of two adjacent cargo retrieval and placing apparatuses 2 on the same side from interfering with each other.

The auxiliary retrieval and placing region of the auxiliary cargo retrieval and placing apparatus 2b is separated from a main retrieval and placing region of the main cargo retrieval and placing apparatus 2a on the same side. That is, the auxiliary cargo retrieval and placing apparatus 2b and the main cargo retrieval and placing apparatus 2a that are on the same side do not have a common retrieval and placing region, thereby avoiding the probability that the auxiliary cargo retrieval and placing apparatus 2b, a main cargo retrieval and placing apparatus 2a on the upper side of the auxiliary cargo retrieval and placing apparatus 2b, and a main cargo retrieval and placing apparatus 2a on an opposite side of the auxiliary cargo retrieval and placing apparatus 2b collide with and interfere with each other.

In another embodiment, all main cargo retrieval and placing apparatuses 2a may be disposed on the same shelf 1, and two main cargo retrieval and placing apparatuses 2a adjacent to each other in the vertical direction. With this arrangement, the auxiliary cargo retrieval and placing apparatus 2b and the lowermost main cargo retrieval and placing apparatus 2a may be located on the same shelf 1 and move on two opposite sides of the shelf 1 respectively; alternatively, the auxiliary cargo retrieval and placing apparatus 2b and the lowermost main cargo retrieval and placing apparatus 2a may be located on two opposite sides of a shelf 1 respectively and move on surfaces of two shelves 1 respectively. For the arrangement of each main cargo retrieval and placing apparatus 2a in this embodiment, reference may be made to embodiment two.

In another embodiment, all main cargo retrieval and placing apparatuses 2a corresponding to the same storage unit are disposed on the same side of the same shelf 1. The auxiliary cargo retrieval and placing apparatus 2b is disposed on the other opposite side of the shelf 1 or disposed on an adjacent shelf 1. Moreover, the main cargo retrieval and placing apparatuses 2a and the auxiliary cargo retrieval and placing apparatus 2b are located in the same laneway 10. With this arrangement, the auxiliary retrieval and placing region of the auxiliary cargo retrieval and placing apparatus 2b may overlap only the main retrieval and placing region of the lowermost main cargo retrieval and placing apparatus 2a or overlap main retrieval and placing regions of two adjacent main cargo retrieval and placing apparatuses 2a. For the arrangement of each main cargo retrieval and placing apparatus 2a in this embodiment, reference may be made to embodiment three or embodiment four, which is not repeated here.

### Embodiment six

This embodiment provides a cargo storing and retrieval system. Moreover, the basic structure of the cargo storing and retrieval system provided in this embodiment is the same as the basic structure of the cargo storing and retrieval system in embodiment one, and only part of the arrangement is different. In this embodiment, the same content as that in embodiment one is not repeated.

In this embodiment, a storing and retrieval mechanism 22 includes a mounting bracket 221, a retractable mechanism 224, and a cargo storing and retrieval assembly. The mounting bracket 221 can be mounted on two vertical rails 211 in a movable manner in the vertical direction. The retractable mechanism 224 is connected between the mounting bracket 221 and the cargo storing and retrieval assembly. Moreover, the retractable mechanism 224 can drive the cargo storing and retrieval assembly to be retracted entirely in the second direction relative to the mounting bracket 221 so as to drive the cargo storing and retrieval assembly to switch between an initial position and an extended position. The cargo storing and retrieval assembly includes a sliding seat 223 and retractable fork arms 222. The retractable mechanism 224 is connected between the mounting bracket 221 and the sliding seat 223. The retractable fork arms 222 can be retracted in the second direction relative to the sliding seat 223 so as to implement the transfer of a cargo 5 between the sliding seat 223 and a storage position 121 or between the sliding seat 223 and a temporary storage position 31.

When a respective cargo retrieval and placing apparatus 2 is in an initial state, the cargo storing and retrieval assembly is in the initial position and is located directly above the mounting bracket 221, the retractable fork arms 222 are in a retracted state relative to the sliding seat 223, and ends of the retractable fork arms 222 are spaced apart from a shelf 1 to prevent the storing and retrieval mechanism 22 from interfering with the shelf 1 during movement. When a cargo 5 in the storage position 121 or a cargo in the temporary storage position 31 needs to be picked up, the sliding seat 223 extends to the extended position relative to the mounting bracket 221. Synchronously, the retractable fork arms 222 extend out relative to the sliding seat 223 so as to dock with the cargo 5 in the storage position 121. After the retractable fork arms 222 dock with the cargo 5, the retractable fork arms 222 are retracted relative to the sliding seat 223; simultaneously or subsequently, the sliding seat 223 is retracted relative to the mounting bracket 221 so as to drive the cargo 5 to be transferred onto the sliding seat 223.

With the preceding arrangement, the sliding seat 223 can extend out relative to the mounting bracket 221 so as to shorten the distance of the cargo 5 between the sliding seat 223 and the storage position 121 or between the sliding seat 223 and the temporary storage position 31. Therefore, when the cargo 5 is transferred between the sliding seat 223 and the shelf 1, the cargo 5 can be reliably supported by the sliding seat 223 and/or the shelf 1, avoiding falling, tilting or other problems during the transfer process of the cargo 5 caused by the heaviness of the cargo 5 or the deviation of the center of gravity of the cargo 5 from the center of the cargo 5 and improving the reliability, stability, and safety of the transfer of the cargo 5 between the storing and retrieval mechanism 22 and the shelf 1.

The cargo retrieval and placing apparatus 2 provided in this embodiment may be applied to any embodiment from embodiment one to embodiment five.

### Embodiment seven

This embodiment provides a cargo storing and retrieval system. Moreover, the basic structure of the cargo storing and retrieval system provided in this embodiment is the same as the basic structure of the cargo storing and retrieval system in embodiment one, and only part of the arrangement is different. In this embodiment, the same content as that in embodiment one is not repeated.

In this embodiment, all storage positions 121 in a first common retrieval and placing region 122 are regular storage positions. That is, a regular storage position may be a target storage position 121 of a target cargo 5 to be inbound to implement the daily inbound storage, thereby increasing the warehousing capacity of the cargo storing and retrieval system. With this arrangement, the cargo 5 to be inbound and stored into the regular storage position should be a cargo 5 with a relatively high outbound frequency so as to reduce the effect of the cargo 5 at the regular storage position on the retrieval and placing efficiency of the cargo 5.

When all storage positions 121 in the first common retrieval and placing region 122 are regular storage positions, if a target cargo 5 is located in a main retrieval and placing region on the upper side and not in the first common retrieval and placing region 122, a main cargo retrieval and placing apparatus 2a on the upper side transfers the target cargo 5 to be outbound to an idle regular storage position in the first common retrieval and placing region 122. If all the regular storage positions are occupied by non-target cargoes 5 at this time, a main cargo retrieval and placing apparatus 2a on the lower side first transfers a non-target cargo 5 in a regular storage position to another idle storage position 121 in a respective main retrieval and placing region.

The arrangement of the preceding first common retrieval and placing region 122 may be applied to any embodiment from embodiment one to embodiment five.

### Embodiment eight

This embodiment provides a cargo storing and retrieval system. Moreover, the cargo storing and retrieval system provided in this embodiment is a refinement based on any preceding embodiment. This embodiment will not reiterate the same content as described in any preceding embodiment.

In this embodiment, each of two opposite sides of a temporary storage assembly 3 in the second direction is open to form a side opening. That is, a carrying vehicle may carry a cargo 5 into and out of a temporary storage position 31 from an opening on any side, improving the path planning flexibility of the carrying vehicle, thereby improving the carrying efficiency of the cargo 5 by the carrying vehicle, and improving the efficiency of the cargo storing and retrieval system.

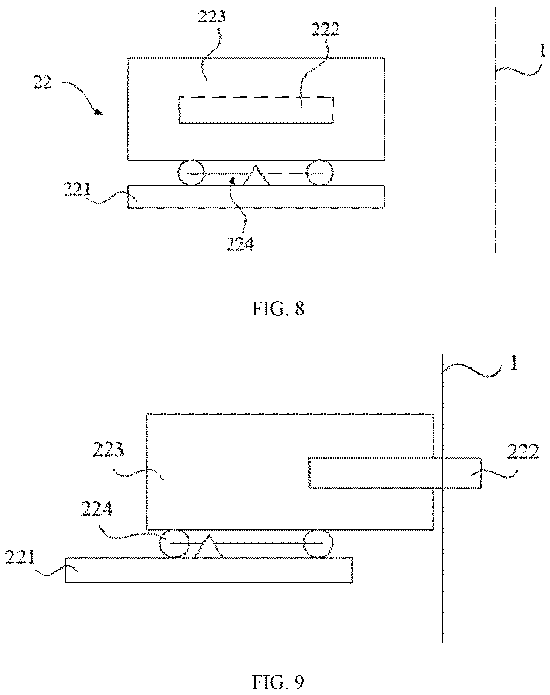

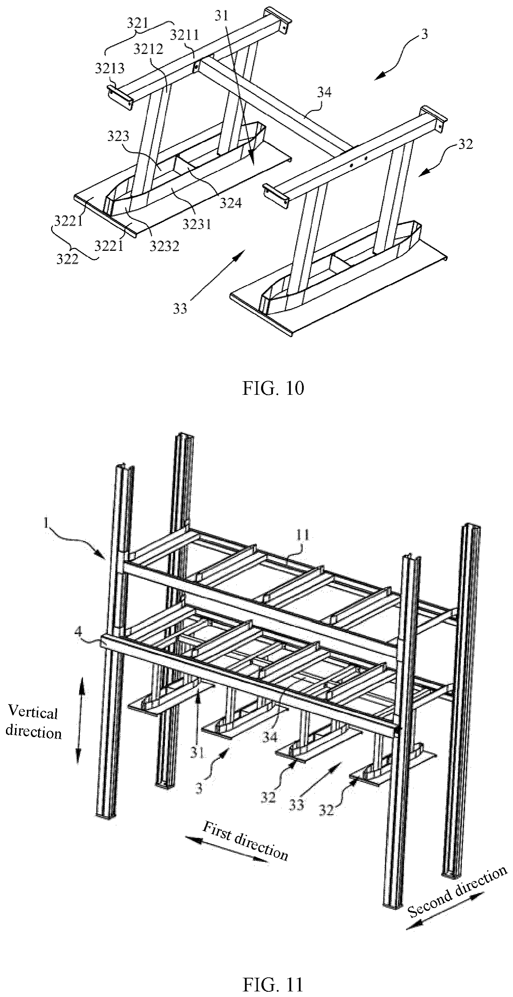

As shown in FIGS. 9 to 11, the temporary storage assembly 3 includes two temporary storage brackets 32 opposite to each other and spaced apart in the first direction. The upper end of each temporary storage bracket 32 is connected to a shelf 1, and the lower end of each temporary storage bracket 32 is configured to support the cargo 5. One temporary storage position 31 is formed between two temporary storage brackets 32. The upper end of each temporary storage bracket 32 is connected to the lowermost cargo partition 11. The temporary storage position 31 is formed between the two adjacent temporary storage brackets 32 so that a bottom opening 33 of the temporary storage position 31 and two side openings of the temporary storage position 31 are naturally formed through gaps between the two temporary storage brackets 32, helping to simplify the structure of the temporary storage assembly 3 and reducing the processing difficulty of the temporary storage assembly 3. Moreover, such an arrangement helps to implement the generalization of the temporary storage brackets 32 so that the number of temporary storage brackets 32 can be reasonably selected according to the inbound and outbound requirements and the length of the shelf 1 in the second direction, thereby improving the layout flexibility of the temporary storage assembly 3.

Each temporary storage bracket 32 includes a hanger 321 and a bearer 322. The upper end of the hanger 321 is connected to the shelf 1. The temporary storage position 31 is formed between two hangers 321. The bearer 322 is mounted on the lower end of the hanger 321 and extends in the direction toward the temporary storage position 31. Moreover, the bottom opening 33 is formed between the two bearers 322 on two sides of the same temporary storage position 31. A support portion 3221 configured to support the cargo 5 is formed at a portion of the bearer 322 extending into the temporary storage position 31. Two support portions 3221 on two sides of the same temporary storage position 31 are configured to support the bottom of the cargo 5. The bottom opening 33 is formed between the two support portions 3221.

The hanger 321 includes a mounting top beam 3211 extending in the second direction and mounting vertical beams 3212 connected between the mounting top beam 3211 and the bearer 322. The mounting top beam 3211 is fastened to the cargo partition 11. Each of two ends of the mounting top beam 3211 is provided with a mounting plate 3213. Mounting plates 3213 on two ends are fastened to two frame beams respectively. Such an arrangement can guarantee the mounting convenience and mounting stability of the respective temporary storage bracket 32 on the shelf 1. At least two mounting vertical beams 3212 are provided and spaced apart in the second direction to improve the structural strength and stiffness of the entire hanger 321.

In this embodiment, two opposite sides of the bearer 322 in the first direction extend out from corresponding sides of the hanger 321. That is, two support portions 3221 are formed on each bearer 322 and may correspond to two temporary storage positions 31 respectively. Such an arrangement can improve the universality of the hanger 321 so that when two or more temporary storage positions 31 are disposed side by side, the hanger 321 and the bearer 322 that are between the two temporary storage positions 31 are both universal. In other embodiments, the temporary storage assembly 3 may include only two temporary storage brackets 32. One end of a bearer 322 extends out from a hanger 321.

In order to improve the reliability of the temporary storage bracket 32 supporting the cargo 5, a reinforcement member is connected to the lower side of the bearer 322. The reinforcement member at least partially extends below each support portion 3221 and is configured to structurally reinforce part of each support portion 3221, thereby preventing each support portion 3221 from recessing or being bent downward, and thus guaranteeing the stability of supporting the cargo 5. In this embodiment, the reinforcement member extends in the first direction, and two ends of the reinforcement member extend to the two support portions 3221 respectively. In other embodiment, at least one reinforcement member is provided for each support portion 3221 correspondingly and may extend in the second direction.

Reinforcement members correspond to mounting top beams 3211 in a one-to-one manner. The reinforcement member, the bearer 322, and the mounting top beam 3211 are fastened by a fastener inserted through the reinforcement member, the bearer 322, and the mounting top beam 3211 sequentially, thereby implementing the connection of the bearer 322, the reinforcement member, and the mounting vertical beam 3212 and preventing the fastener from being exposed to the upper side of the support portion 3221 and scratching the cargo 5. A mounting long hole extending in the second direction is disposed on the reinforcement member. The fastener is inserted through the mounting long hole so as to adjust an engagement position between the fastener and the reinforcement member, reducing the assembly difficulty of the reinforcement member, the bearer 322, and the mounting top beam 3211.

A guide member 323 protrudes out from the upper side of the bearer 322 and is located in the temporary storage position 31. The guide member 323 extends in the second direction. A guide plate portion 3232 is formed on each of two ends of the guide member 323. Two guide plate portions 3232 are inclined in a direction away from each other and toward a direction away from the respective temporary storage position 31. The arrangement of the guide member 323 can guide the cargo 5 into and out of the temporary storage position 31 by the two guide plate portions 3232, improving the smoothness of the carrying vehicle retrieval and placing the cargo 5 at the temporary storage position 31. Moreover, the arrangement of the guide member 323 can prevent the cargo 5 from scratching the hanger 321, improving the safety of retrieval and placing the cargo 5.

The guide member 323 further includes a side baffle portion 3231 connected between the two guide plate portions 3232. The side baffle portion 3231 is disposed vertically and extends in the second direction. The side baffle portion 3231 can stop the cargo 5 from moving out of the temporary storage position 31 in the first direction and also prevent the cargo 5 from colliding with the hanger 321.

In this embodiment, two guide members 323 are disposed on the same bearer 322 and located on two sides of the hanger 321 respectively. Two ends of the two guide members 323 abut against each other correspondingly so that the lower end of the hanger 321 is enclosed between the two guide members 323. One end of each guide plate portion 3232 facing away from a baffle portion is bent to form a bent plate portion. Bent plate portions of two guide members 323 abut against each other at the corresponding ends, so as to prevent an edge from being generated on each of two ends of each guide member 323 and scratching the cargo 5 or the carrying vehicle. Each bent plate portion is perpendicular to the second direction.

The two guide members 323 on the same bearer 322 are connected to each other through a connector 324 so as to avoid the deformation of the guide members 323 under the extrusion action of the cargo 5, improving the structural strength and stiffness of the entire guide members 323 and improving guide reliability. The connector 324 is connected between two baffle portions.

A connection beam 34 is connected between two adjacent mounting top beams 3211. The arrangement of the connection beam 34 helps to guarantee the precision of a relative position between two adjacent temporary storage brackets, thereby guaranteeing the arrangement precision of the width of the temporary storage position 31. In other embodiments, no connection beam 34 may be disposed between two temporary storage brackets 32. In this case, frame beams on the shelf 1 may be configured as positioning structures for mounting and positioning the temporary storage brackets 32, guaranteeing the position precision between the two adjacent temporary storage brackets 32.

## Claims

1. A cargo storing and retrieval system, comprising:
a shelf (1) having a storage unit, wherein the storage unit comprises a plurality of rows of storage spaces (12) disposed in a vertical direction, and each row of storage spaces (12) among the plurality of rows of storage spaces (12) comprises a plurality of storage positions (121) disposed side by side in a first direction; and
a plurality of cargo retrieval and placing apparatuses (2), wherein the storage unit is provided with at least two cargo retrieval and placing apparatuses (2) among the plurality of cargo retrieval and placing apparatuses (2), a cargo retrieval and placing apparatus (2) among the plurality of cargo retrieval and placing apparatuses (2) is a main cargo retrieval and placing apparatus (2a) corresponding to a main retrieval and placing region, at least two main retrieval and placing regions corresponding to the at least two cargo retrieval and placing apparatuses (2) respectively are disposed sequentially from top to bottom and jointly cover all the plurality of rows of storage spaces (12) of the storage unit, two adjacent main retrieval and placing regions overlap to cover at least one row of storage spaces (12) among the plurality of rows of storage spaces (12) to form a first common retrieval and placing region (122), and the main cargo retrieval and placing apparatus (2a) is able to move along a surface of the shelf (1) to retrieve and place a cargo (5) that is at a storage position (121) among the plurality of storage positions (121) and is in a main retrieval and placing region corresponding to the main cargo retrieval and placing apparatus (2a).

2. The cargo storing and retrieval system according to claim 1, wherein a plurality of transverse rails (4) are disposed on the surface of the shelf (1) and each extend in the first direction; and
each cargo retrieval and placing apparatus (2) among the plurality of cargo retrieval and placing apparatuses (2) comprises a moving mechanism (21) and a storing and retrieval mechanism (22), the moving mechanism (21) is able to move on transverse rails (4) among the plurality of transverse rails (4) in the first direction, and the storing and retrieval mechanism (22) is mounted on the moving mechanism (21) in a movable manner in the vertical direction.

3. The cargo storing and retrieval system according to claim 2, wherein at least one storage unit has two adjacent main cargo retrieval and placing apparatuses (2a) respectively movable on two opposite sides of a same shelf (1) and having the first common retrieval and placing region (122), and main retrieval and placing regions of the two adjacent main cargo retrieval and placing apparatuses (2a) cover all of the at least one storage unit of the same shelf (1) in a second direction, the second direction is perpendicular to the first direction; or
at least two shelves (1) are disposed side by side and spaced apart in the second direction, a laneway (10) is formed between two adjacent shelves (1) among the at least two shelves (1), multiple cargo retrieval and placing apparatuses (2) in the laneway (10) are each configured to retrieve and place cargoes (5) at storage units on two sides of the laneway (10), at least one of the storage units has two adjacent main cargo retrieval and placing apparatuses (2a) respectively movable on the two adjacent shelves (1) and having the first common retrieval and placing region (122), and the second direction is perpendicular to the first direction.

4. The cargo storing and retrieval system according to claim 3, wherein in two main cargo retrieval and placing apparatuses (2a) that correspond to a same storage unit and are disposed adjacently in the vertical direction, an upper end of a moving mechanism (21) on a lower side is higher than a lower end of a moving mechanism (21) on an upper side.

5. The cargo storing and retrieval system according to claim 2, wherein in two main cargo retrieval and placing apparatuses (2a) that correspond to a same storage unit and are disposed adjacently in the vertical direction, upper and lower moving mechanisms (21) are spaced apart in the vertical direction; and
at least one of the following is satisfied:
a storing and retrieval mechanism (22) on an upper side is able to move to extend downward out from a lower end of a moving mechanism (21) to retrieve and place a cargo (5) at a storage position (121) in the first common retrieval and placing region (122); and
a storing and retrieval mechanism (22) on a lower side is able to move to extend upward out from an upper end of a moving mechanism (21) to retrieve and place a cargo (5) at a storage position (121) in the first common retrieval and placing region (122).

6. The cargo storing and retrieval system according to claim 2, wherein at least one storage unit has two main cargo retrieval and placing apparatuses (2a) that are movable on a same surface of a same shelf (1) and are adjacent to each other in the vertical direction, and at least one of the two main cargo retrieval and placing apparatuses (2a) is switchable between a first operation state and a second operation state; and
in response to one main cargo retrieval and placing apparatus (2a) being in the first operation state, the one main cargo retrieval and placing apparatus (2a) and a main cargo retrieval and placing apparatus (2a) adjacent to the one main cargo retrieval and placing apparatus (2a) on a same side of a same shelf (1) are spaced apart in the vertical direction; and in response to the one main cargo retrieval and placing apparatus (2a) being in the second operation state, the one main cargo retrieval and placing apparatus (2a) partially overlaps a main cargo retrieval and placing apparatus (2a) that is adjacent in the vertical direction to and on a same side of a same shelf (1) with the one main cargo retrieval and placing apparatus (2a).

7. The cargo storing and retrieval system according to claim 6, wherein the moving mechanism (21) comprises two vertical rails (211) parallel to each other in the first direction and spaced apart and moving wheel mechanisms configured to drive the two vertical rails (211) to move along the transverse rails (4), and the storing and retrieval mechanism (22) is mounted between the two vertical rails (211) in a movable manner along the two vertical rails (211); and
at least one end of each vertical rail (211) among the two vertical rails (211) of one main cargo retrieval and placing apparatus (2a) facing a main cargo retrieval and placing apparatus (2a) that is adjacent to and on the same side with the one main cargo retrieval and placing apparatus (2a) is retractable to enable the one main cargo retrieval and placing apparatus (2a) where the two vertical rails (211) are located to switch between the first operation state and the second operation state.

8. The cargo storing and retrieval system according to claim 7, satisfying at least one of the following:
in response to the one main cargo retrieval and placing apparatus (2a) being in the second operation state, vertical rails (211) of the two adjacent main cargo retrieval and placing apparatuses (2a) partially overlap each other in the vertical direction; and
two ends of each vertical rail (211) are retractable.

9. The cargo storing and retrieval system according to claim 7, wherein each vertical rail (211) comprises a rail body extending in the vertical direction; each of at least one end of the rail body of one main cargo retrieval and placing apparatus (2a) facing the main cargo retrieval and placing apparatus (2a) adjacent to and on the same side with the one main cargo retrieval and placing apparatus (2a) is slidably connected to an adjustment rail; the vertical rail (211) further comprises an adjustment driving member; the adjustment driving member is configured to drive the adjustment rail to lift relative to the rail body to enable the vertical rail (211) to switch between an initial state and an extended state; in response to the vertical rail (211) being in the initial state, the main cargo retrieval and placing apparatus (2a) is in the first operation state; and in response to the vertical rail (211) being in the extended state, the main cargo retrieval and placing apparatus (2a) is in the second operation state.

10. The cargo storing and retrieval system according to any one of claims 1 to 9, wherein at least two shelves (1) are disposed side by side and spaced apart in a second direction, a laneway (10) is formed between two adjacent shelves (1) among the at least two shelves (1), multiple cargo retrieval and placing apparatuses (2) in the laneway (10) are each able to retrieve and place cargoes (5) at multiple storage spaces (12) on two sides of the laneway (10), and the second direction is perpendicular to the first direction.

11. The cargo storing and retrieval system according to any one of claims 1 to 9, wherein one cargo retrieval and placing apparatus (2) corresponding to at least one storage unit is an auxiliary cargo retrieval and placing apparatus (2b), the auxiliary cargo retrieval and placing apparatus (2b) corresponds to an auxiliary retrieval and placing region, and the auxiliary retrieval and placing region at least covers a lowest row of storage spaces (12) among the plurality of rows of storage spaces (12).

12. The cargo storing and retrieval system according to claim 11, wherein a retrieval and placing region of each cargo retrieval and placing apparatus (2) among the plurality of cargo retrieval and placing apparatuses (2) covers all of the at least one storage unit of a same shelf (1) in a second direction, the auxiliary cargo retrieval and placing apparatus (2b) and a lowermost main cargo retrieval and placing apparatus (2a) that correspond to a same storage unit are located on two opposite sides of the shelf (1) respectively, and the second direction is perpendicular to the first direction; or
at least two shelves (1) are disposed side by side and spaced apart in the second direction, a laneway (10) is formed between two adjacent shelves (1) among the at least two shelves (1), multiple cargo retrieval and placing apparatuses (2) in the laneway (10) are able to retrieve and place cargoes (5) at multiple storage spaces (12) on two sides of the laneway (10), the auxiliary cargo retrieval and placing apparatus (2b) and the lowermost main cargo retrieval and placing apparatus (2a) that correspond to the same storage unit are mounted on the two adjacent shelves (1) respectively, and the second direction is perpendicular to the first direction.

13. The cargo storing and retrieval system according to claim 12, wherein corresponding to the same storage unit, an upper main cargo retrieval and placing apparatus (2a) adjacent to the lowermost main cargo retrieval and placing apparatus (2a) and the auxiliary cargo retrieval and placing apparatus (2b) are mounted on a same side of the same shelf (1) and are spaced apart in the vertical direction.

14. The cargo storing and retrieval system according to claim 11, wherein a main retrieval and placing region of a main cargo retrieval and placing apparatus (2a) that is adjacent to and on a same side with the auxiliary cargo retrieval and placing apparatus (2b) is separated from the auxiliary retrieval and placing region of the auxiliary cargo retrieval and placing apparatus (2b) in the vertical direction.

15. The cargo storing and retrieval system according to any one of claims 1 to 9, satisfying at least one of the following:
in two main retrieval and placing areas adjacent to each other in the vertical direction and corresponding to a same storage unit, an average inbound and outbound frequency of a cargo (5) in a main retrieval and placing region on a lower side is higher than an average inbound and outbound frequency of a cargo (5) in a main retrieval and placing region on an upper side; and
corresponding to the same storage unit, a row number of storage spaces (12) covered by an uppermost main retrieval and placing region is n1, and a row number of storage spaces (12) covered by a lowermost main retrieval and placing region is n2, wherein n2 > n1.

16. The cargo storing and retrieval system according to any one of claims 1 to 9, wherein among all storage positions (121) located in the first common retrieval and placing region (122), part of storage positions (121) are transfer storage positions, and remaining storage positions (121) are regular storage positions; each transfer storage position is configured to place a cargo (5) transferring from a main cargo retrieval and placing apparatus (2a) to another main cargo retrieval and placing apparatus (2a); and each regular storage position is a target storage position of a cargo (5) to be inbound.

17. The cargo storing and retrieval system according to any one of claims 1 to 9, wherein a temporary storage assembly (3) is disposed at a bottom of the shelf (1) and has a temporary storage position (31) for placing the cargo (5), the temporary storage assembly (3) has a side opening for the cargo (5) to enter and exit the temporary storage position (31), the temporary storage position (31) is located below a lowest row of storage spaces (12) among the plurality of rows of storage spaces (12), and a lowermost cargo retrieval and placing apparatus (2) among the plurality of cargo retrieval and placing apparatuses (2) is able to retrieve and place the cargo at the storage position (31) through the side opening; and
the cargo storing and retrieval system further comprises a carrying vehicle able to retrieve the cargo (5) at the temporary storage position (31) or place the cargo (5) into the temporary storage position (31) through the side opening.

18. The cargo storing and retrieval system according to claim 17, wherein a low-level passage (20) is formed between a bottom of the temporary storage assembly (3) and a ground of the cargo storing and retrieval system, a bottom opening (33) communicating with the low-level passage (20) is disposed at the bottom of the temporary storage assembly (3), and the bottom opening (33) communicates with the side opening; and
the carrying vehicle is a lift-and-carry vehicle and is able to move into the low-level passage (20), a cargo carrier of the carrying vehicle is able to vertically enter and exit the temporary storage position (31) through the bottom opening (33), and the cargo carrier is able to carry the cargo (5) to horizontally enter and exit the temporary storage position (31) through the side opening.

19. The cargo storing and retrieval system according to claim 18, wherein a passage for the carrying vehicle to run is formed between a bottom of the lowermost cargo retrieval and placing apparatus (2) and the ground.

20. The cargo storing and retrieval system according to claim 17, satisfying at least one of the following:
each of two opposite sides of the temporary storage assembly (3) in a second direction is provided with a side opening, and the second direction is perpendicular to the first direction; and
the temporary storage assembly (3) comprises two temporary storage brackets (32) opposite to each other and spaced apart in the first direction, an upper end of each temporary storage bracket (32) among the two temporary storage brackets (32) is connected to the shelf (1), and a lower end of the each temporary storage bracket (32) is configured to support the cargo (5).
